(19) Europäisches Patentamt
European Patent Office
Office européen des brevets

(11) **EP 4 741 878 A1**

(12) **EUROPEAN PATENT APPLICATION**
published in accordance with Art. 153(4) EPC

(43) Date of publication:
**13.05.2026 Bulletin 2026/20**

(21) Application number: 24882869.1

(22) Date of filing: **24.10.2024**

(51) International Patent Classification (IPC):
*G01S 7/497* (2006.01)
*G06T 7/593* (2017.01)   *G06T 7/62* (2017.01)
*G06T 7/13* (2017.01)    *G06T 7/11* (2017.01)
*G01S 17/89* (2020.01)

(52) Cooperative Patent Classification (CPC):
**G01S 7/497; G01S 17/89; G06T 7/11; G06T 7/13;
G06T 7/593; G06T 7/62**

(86) International application number:
**PCT/KR2024/016329**

(87) International publication number:
**WO 2025/089842 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.10.2023   KR 20230145096**

(71) Applicant: **Samsung Electronics Co., Ltd.
Suwon-si, Gyeonggi-do 16677 (KR)**

(72) Inventors:
• **CHOI, Isak
 Suwon-si, Gyeonggi-do 16677 (KR)**
• **BYUN, Dongnam
 Suwon-si, Gyeonggi-do 16677 (KR)**
• **HWANG, Jinyoung
 Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD FOR GENERATING SPATIAL MAP USING CAPTURED IMAGE OF TARGET AREA AND ELECTRONIC DEVICE FOR PERFORMING SAME**

(57)   A method of generating a spatial map includes obtaining a captured image of a target area in a space, obtaining light detection and ranging (LiDAR) scan data by scanning a depth of the target area with respect to a first height, performing object detection on the captured image, and, according to the performed object detection, generating a spatial map of the target area, based on all of the LiDAR scan data and the captured image.

FIG. 1

**Description**

TECHNICAL FIELD

The disclosure relates to a method of generating a spatial map, and more particularly, to a method of increasing the accuracy of a spatial map by using a captured image of a target area.

BACKGROUND ART

Electronic devices such as robot cleaners can scan a space by using a built-in light detection and ranging (LiDAR) sensor while moving through the space, and generate a map of the space (spatial map) based on scan data.
However, when the spatial map is generated using only data (LiDAR scan data) obtained by the scanning of the space by using the LiDAR sensor, the generated spatial map may differ from the structure of the actual space.
Because various objects (e.g., furniture and home appliances) may exist in the space, and electronic devices cannot determine whether a point where a signal (light) transmitted by the LiDAR sensor is reflected is a wall in the space or an object existing in the space. Electronic devices can actually generate a spatial map by recognizing a point where an object exists as a wall of a space, and therefore the border of the spatial map may be different from the actual space.

DISCLOSURE OF INVENTION

SOLUTION TO PROBLEM

Accordingly, provided is an electronic device configured to generate a more accurate spatial map of a surrounding environment based on LiDAR scan data and an image captured from a camera. Further provided is a method of generating the same.
Additional aspects will be set forth in part in the description which follows and, in part, will be apparent from the description, or may be learned by practice of the presented embodiments.
According to an aspect of the disclosure, a method of generating a spatial map, disclosed as a technology for achieving a technical task, may include obtaining a captured image of a target area in a space, obtaining light detection and ranging (LiDAR) scan data by scanning a depth of the target area with respect to a first height, performing object detection on the captured image, and, according to the performed object detection, generating a spatial map of the target area based on the LiDAR scan data and the captured image.
According to an aspect of the disclosure, an electronic device for generating a spatial map, disclosed as a technology for achieving a technical task, may include at least one memory storing a program for generating a spatial map, and at least one processor, wherein, by executing the program stored in the at least one memory, the at least one processor is configured to: obtain a captured image of a target area in a space, obtain LiDAR scan data by scanning a depth of the target area with respect to a first height, perform object detection on the captured image, and according to the performed object detection, generate a spatial map of the target area, based on the LiDAR scan data and the captured image.
According to an aspect of the disclosure, a non-transitory computer-readable recording medium, disclosed as a technology for achieving a technical task, may have recorded thereon a computer program, which, when executed by a computer, performs at least one of embodiments of the above-described method.
According to an embodiment of the disclosure, a computer program is stored in a non-transitory medium to execute at least one of the embodiments of the above-described method.

BRIEF DESCRIPTION OF DRAWINGS

The above and other aspects, features, and advantages of certain embodiments of the present disclosure will be more apparent from the following description taken in conjunction with the accompanying drawings, in which:

FIG. 1 is a diagram of a system for generating a spatial map, according to an embodiment of the disclosure;
FIG. 2 is a diagram for comparing a spatial map generated according to an embodiment of the disclosure with a spatial map generated using only light detection and ranging (LiDAR) scan data in the related art;
FIG. 3 is a block diagram for explaining the structure of a server included in a system for generating a spatial map, according to an embodiment of the disclosure;
FIG. 4 is a block diagram for explaining the structure of a robot cleaner included in a system for generating a spatial map, according to an embodiment of the disclosure;
FIG. 5 is a view for describing objectives and major features of a spatial map generating method according to an embodiment of the disclosure;

FIG. 6 is a flowchart of a method of generating a spatial map, according to an embodiment of the disclosure;

FIG. 7 is a flowchart for explaining sub-operations included in operation 605 of FIG. 6 according to an embodiment of the disclosure;

FIG. 8 is a flowchart for explaining sub-operations included in operation 701 of FIG. 7 according to an embodiment of the disclosure;

FIG. 9 is a flowchart for explaining sub-operations included in operation 802 of FIG. 8 according to an embodiment of the disclosure;

FIG. 10 is a flowchart for explaining sub-operations included in operation 803 of FIG. 8 according to an embodiment of the disclosure;

FIG. 11 is a flowchart for explaining sub-operations included in operation 803 of FIG. 8 according to an embodiment of the disclosure;

FIG. 12 is a flowchart for explaining sub-operations included in operation 803 of FIG. 8 according to an embodiment of the disclosure;

FIG. 13 is a flowchart for explaining sub-operations included in operation 902 of FIG. 9 according to an embodiment of the disclosure;

FIG. 14 is a flowchart for explaining sub-operations included in operation 902 of FIG. 9 according to an embodiment of the disclosure;

FIG. 15 is a flowchart for explaining sub-operations included in operation 902 of FIG. 9 according to an embodiment of the disclosure;

FIG. 16 is a view for explaining an operation of obtaining LiDAR scan data for a target area, in a process of generating a spatial map, according to an embodiment of the disclosure;

FIG. 17 is a view for explaining an operation of detecting an object from the captured image of the target area, in the process of generating a spatial map, according to an embodiment of the disclosure;

FIG. 18 is a view for explaining an operation of obtaining the depth image from the captured image and obtaining depth values from the depth image, in a process of generating a spatial map, according to an embodiment of the disclosure;

FIG. 19 is a view for explaining an operation of performing depth calibration by using depth values obtained from the LiDAR scan data and the depth image, in a process of generating a spatial map, according to an embodiment of the disclosure;

FIG. 20 is a view for explaining an operation of obtaining depth values of spots located at the optimal height, in a process of generating a spatial map, according to an embodiment of the disclosure;

FIG. 21 is a view for explaining an operation of obtaining the depth values corresponding to the LiDAR scan data from the depth image by using the transformation matrix, in a process of generating a spatial map, according to an embodiment of the disclosure;

FIG. 22 is a view for explaining an operation of obtaining depth values corresponding to LiDAR scan data from a depth image through semantic segmentation, in a process of generating a spatial map, according to an embodiment of the disclosure;

FIG. 23 is a view for explaining an operation of obtaining depth values corresponding to LiDAR scan data from a depth image through elbow point detection, in a process of generating a spatial map, according to an embodiment of the disclosure;

FIG. 24 is a view for explaining an operation of determining an optimal height, in a process of generating a spatial map, according to an embodiment of the disclosure; and

FIG. 25 is a view for explaining three conditions used to determine an optimal height, in a process of generating a spatial map, according to an embodiment of the disclosure.

## MODE FOR THE INVENTION

In the following description of the disclosure, descriptions of techniques that are well known in the art and not directly related to the disclosure are omitted. This is to clearly convey the gist of the disclosure by omitting any unnecessary explanation. Also, terms used below are defined in consideration of functions in the disclosure, and may have different meanings according to an intention of a user or operator, customs, or the like. Thus, the terms should be defined based on the description throughout the specification.

For the same reason, some elements in the drawings are exaggerated, omitted, or schematically illustrated. Also, actual sizes of respective elements are not necessarily represented in the drawings. In the drawings, the same or corresponding elements are denoted by the same reference numerals.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions. It will be understood that the terms "includes," "comprises," "has," "having," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

The advantages and features of the disclosure and methods of achieving the advantages and features will become apparent with reference to embodiments of the disclosure described in detail below with reference to the accompanying drawings. However, this is not intended to limit the disclosure to particular modes of practice, and all changes, equivalents, and substitutes that do not depart from the spirit and technical scope are encompassed in the disclosure. These embodiments are provided so that the disclosure will be thorough and complete, and will fully convey the scope of the disclosure to one of ordinary skill in the art. An embodiment of the disclosure may be defined according to the claims. Throughout the specification, like reference numerals or characters refer to like elements. In description of an embodiment of the disclosure, certain detailed explanations of related functions or configurations are omitted when it is deemed that they may unnecessarily obscure the subject matter of the disclosure. Also, terms used below are defined in consideration of functions in exemplary embodiments of the disclosure, and may have different meanings according to an intention of a user or operator, customs, or the like. Thus, the terms should be defined based on the description throughout the specification.

Each block of flowchart illustrations and combinations of blocks in the flowchart illustrations may be implemented by computer program instructions. The computer program instructions may be provided to a processor of a general-purpose computer, special purpose computer, or other programmable data processing equipment, and the instructions, which are executed via the processor of the computer or other programmable data processing equipment, may generate means for performing functions specified in the flowchart block(s). The computer program instructions may also be stored in a computer-usable or computer-readable memory that may direct a computer or other programmable data processing equipment to function in a particular manner, and the instructions stored in the computer-usable or computer-readable memory may produce a manufactured article including instruction means that perform the functions specified in the flowchart block(s). The computer program instructions may be mounted on a computer or other programmable data processing equipment.

In addition, each block of a flowchart may represent a module, segment, or portion of code, which includes one or more executable instructions for implementing specified logical function(s). According to an embodiment of the disclosure, it is also possible that the functions mentioned in the blocks occur out of order. For example, two blocks shown in succession may in fact be executed substantially concurrently, or may be executed in the reverse order according to functions.

The term "unit" or '~ er(or)' used herein may denote a software element or a hardware element such as a field-programmable gate array (FPGA) or an application-specific integrated circuit (ASIC), and perform a certain function. However, the term 'unit 'or '...er(or)' is not limited to software or hardware. The term 'unit' or '...er(or)' may be configured to be included in an addressable storage medium or to reproduce one or more processors. According to an embodiment of the disclosure, the term 'unit' or '...er(or)' may include, by way of example, object-oriented software components, class components, and task components, and processes, functions, attributes, procedures, subroutines, segments of a program code, drivers, firmware, a micro code, a circuit, data, a database, data structures, tables, arrays, and variables. Functions provided through a specific component or a specific '... unit' may be combined to reduce the number, or may be separated into additional components. According to an embodiment of the disclosure, the 'unit' or '...er(or)' may include one or more processors.

The meanings of terms used in the disclosure will now be described.

A 'spatial map' may refer to a map representing the structure or form of a certain space. According to an embodiment of the disclosure, a spatial map representing the structure of a house where a user resides may be generated using an electronic device such as a robot cleaner. The 'spatial map' may be a result of adding various pieces of information (e.g., home appliances or furniture placed within a space) to a general floor plan showing the structure of a house or the like. Terms such as a 'floor plan' or 'spatial layout' may be used instead of the 'spatial map'.

A 'target area' may refer to an area that is photographed or scanned by an electronic device in a process of generating a spatial map. According to an embodiment of the disclosure, an electronic device may photograph a plurality of target areas in a space with a camera and scan them with a light detection and ranging (LiDAR) sensor to generate a spatial map. The electronic device may generate the spatial map by using captured images and LiDAR scan data obtained for a plurality of target areas in the space. The term such as an 'area of interest', a 'photographing area', or a 'scan area' may be used instead of a 'target area'.

'LiDAR scan data' may refer to data obtained by scanning the target area by using a LiDAR sensor provided in an electronic device. According to an embodiment of the disclosure, an electronic device may use a LiDAR sensor to obtain LiDAR scan data including depth values (e.g., distances from the LiDAR sensor to a plurality of spots) of a plurality of spots located at a predetermined specific height. According to an embodiment of the disclosure, the electronic device may obtain ToF scan data including depth values of the plurality of spots located at a specific height, by using a ToF sensor instead of the LiDAR sensor, and may perform embodiments of the disclosure by using the ToF scan data instead of LiDAR scan data.

Alternatively, according to an embodiment of the disclosure, the electronic device may obtain stereo vision scan data including the depth values of the plurality of spots located at a specific height, by using stereo vision technology using two cameras instead of the LiDAR sensor, and may perform embodiments of the disclosure by using the stereo vision scan data instead of the LiDAR scan data. The term such as '1D scan data', 'LiDAR data', 'depth scan data', or 'scan data' may be used instead of the 'LiDAR scan data'.

A 'captured image' may refer to a captured image obtained by photographing a target area by using a camera provided in an electronic device. The captured image may be an RGB image, and, as described in embodiments of the disclosure, may be transformed into a depth image through depth estimation.

The 'depth image' may refer to an image containing depth information about a specific space. The plurality of spots included in the depth image may each have a corresponding depth value. As described above, a depth image may be obtained by performing depth estimation on the captured image. In the disclosure, depth information included in the depth image may refer to relative depth information expressing a relative depth between the plurality of spots on the depth image. Therefore, in one or more embodiments of the disclosure, an electronic device may perform depth calibration by using LiDAR scan data to obtain absolute depth information (e.g., a depth value expressed in standard measurement units) for each spot in a depth image. A term such as a 'depth map' or a 'depth estimation image' may be used instead of the 'depth image'.

The 'depth calibration' may refer to an operation for making the scale of LiDAR scan data identical to that of a depth image. According to an embodiment of the disclosure, the LiDAR scan data may include absolute depth information (e.g., depth values of spots measured in standard measurement units), the depth image may include the relative depth information (e.g., values that relatively represent the depths of spots), and the electronic device may obtain a scale factor for transforming relative depth values for the spots on the depth image into absolute depth values by performing depth calibration on the LiDAR scan data and the depth image. The term such as 'depth scaling', 'depth scale transformation', 'calibration', 'scaling', or 'scale transformation' may be used instead of the 'depth calibration'.

The 'scale factor' may refer to a value used to transform a relative depth value included in a depth image into an absolute depth value. As described above, the electronic device may obtain the scale factor by performing depth calibration. The electronic device may obtain absolute depth values by multiplying the relative depth values for the spots included in the depth image by the scale factor. The term such as a 'scale value', a 'transformation factor', a 'global depth scale', or a 'depth scale' may be used instead of the 'scale factor'.

The 'depth value' may refer to a distance from a location serving as a criterion for measurement (e.g., a location of the electronic device that performs photographing or scanning) to a specific spot in the space. In embodiments of the disclosure, the depth value may include a relative depth value and an absolute depth value. The relative depth value may refer to a value that relatively represents the depth of spots, and the absolute depth value may refer to a value obtained by measuring the depth of spots in a standard measurement unit. For example, assuming that the space includes a first spot and a second spot, relative depth values for the first spot and the second spot are 3 and 5, respectively, and, when an absolute depth value for the first spot is 60cm, an absolute depth value for the second spot is 100cm.

A 'dynamic height scan' may refer to an operation of selecting an optimal height in the target area to determine the border of the spatial map. According to an embodiment of the disclosure, the electronic device may determine the border of the spatial map, based on the depth values of spots included at the optimal height for the target area. The term such as 'optimal height scan', 'dynamic height selection' or 'optimal height selection' may be used instead of the 'dynamic height scan'. The term such as an 'optimal scan height', a 'correction height', a 'representative height', or a 'reference height' may be used instead of the 'optimal height'.

Embodiments of the disclosure will now be described more fully with reference to the accompanying drawings.

Embodiments of the disclosure relate to a method of generating a spatial map by using LiDAR scan data obtained by scanning a target area through a LiDAR sensor and an image obtained by photographing the target area through a camera, and an electronic device for performing the method.

An electronic device performing embodiments of the disclosure may be realized in various types. According to an embodiment of the disclosure, an electronic device (e.g., a robot cleaner) including both a LiDAR sensor and a camera may obtain LiDAR scan data and a captured image by directly scanning and photographing a target space, and generate a spatial map based on the obtained LiDAR scan data and the obtained captured image.

Alternatively, according to an embodiment of the disclosure, an electronic device including only one of a LiDAR sensor or a camera may directly obtain only one of the LiDAR scan data or the captured image and obtain the other from another external device, and then obtain the spatial map based on the LiDAR scan data and the captured image.

Alternatively, according to an embodiment of the disclosure, an electronic device may obtain both the LiDAR scan data and the captured image from the outside, and generate the spatial map based on the obtained LiDAR scan data and the obtained captured image.

In the disclosure, embodiments are described in the context of the electronic device being a robot cleaner, but is not limited thereto. As described above, embodiments of the disclosure may be performed by other types of electronic devices (e.g., robot-type mobile devices -devices that perform various operations while moving automatically or according to user commands) than a robot cleaner. For example, an electronic device such as a butler robot or a pet robot may perform embodiments of the disclosure. When embodiments of the disclosure are performed by an electronic device that does not include at least one of a LiDAR sensor or a camera, an operation in which a robot cleaner directly obtains the LiDAR scan data or the captured image may be replaced by an operation of obtaining the LiDAR scan data or the captured image from the outside.

In embodiments of the disclosure, the robot cleaner may determine whether it is necessary for correcting the spatial map (or whether it is necessary for using the captured image when creating the spatial map), based on the captured image obtained by the camera, and may correct or generate the spatial map by using a depth image obtained from the captured image and LiDAR scan data obtained through a LiDAR sensor. Detailed descriptions will be given with reference to the drawings below.

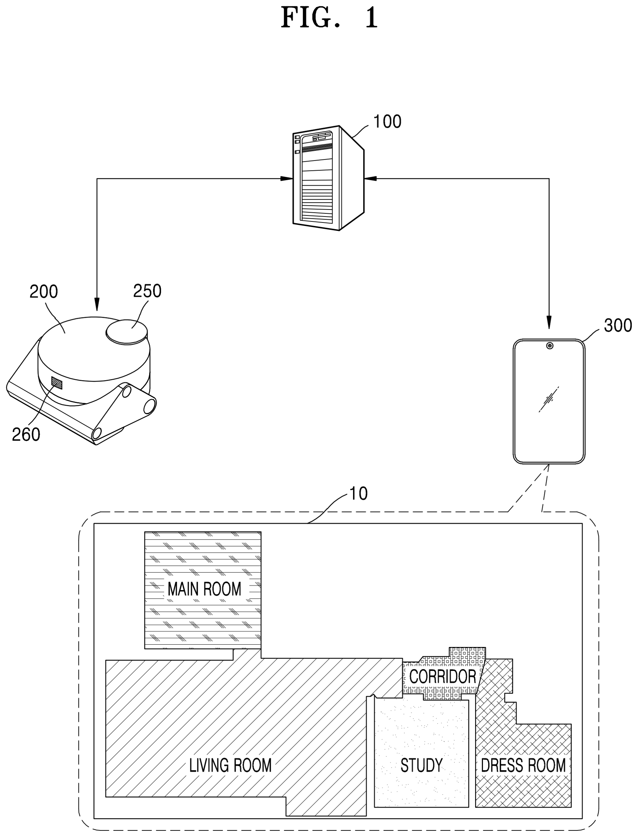

FIG. 1 is a diagram of a system for generating a spatial map, according to an embodiment of the disclosure. Referring to FIG. 1, the system for generating a spatial map, according to an embodiment of the disclosure, may include a robot cleaner 200 and a mobile terminal 300. As described above, in the disclosure, embodiments using the robot cleaner 200 have been described, but various other types of electronic devices may be used instead of the robot cleaner 200.

According to an embodiment of the disclosure, the robot cleaner 200 may obtain information (e.g., a captured image and LiDAR scan data) for generating a spatial map 10. The robot cleaner 200 may measure depths of a plurality of spots located at a specific height of a target area by using a LiDAR sensor 250 and may photograph the target area by using a camera 260.

The robot cleaner 200 may generate the spatial map 10 for a space (e.g., a user's house) by using the obtained information (e.g., information for generating a spatial map). Alternatively, the server 100 or the mobile terminal 300 may generate the spatial map 10 by using the information obtained by the robot cleaner 200. Alternatively, two or more of the robot cleaner 200, the server 100, or the mobile terminal 300 may cooperate to generate the spatial map 10 by using the information obtained by the robot cleaner 200. According to embodiments of the disclosure, it has been described that the robot cleaner 200 performs all processes for generating the spatial map 10. However, some or all of the processes may be performed by another device (e.g., the server 100 or the mobile terminal 300).

According to an embodiment, the robot cleaner 200 may perform an operation based on the generated spatial map. For example, the robot cleaner 200 may perform a cleaning operation based on the generated spatial map.

The spatial map 10 generated by the robot cleaner 200 may be transmitted to the mobile terminal 300 of the user through the server 100 and displayed on the screen of the mobile terminal 300. According to an embodiment of the disclosure, an application for use and control of the robot cleaner 200 may be installed on the mobile terminal 300, and, when the user executes the application on the mobile terminal 300, the mobile terminal 300 may access the server 100 to receive the spatial map 10 and display the spatial map 10 on the screen.

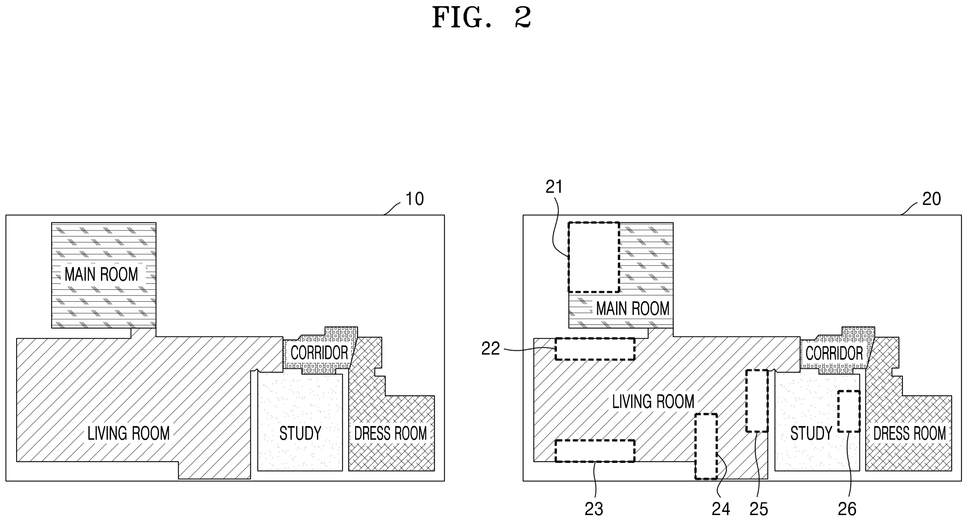

According to embodiments of the disclosure, the robot cleaner 200 may set the borders of the spatial map 10 to be as close as possible to the structure of an actual space, and to this end, not only the LiDAR scan data but also a captured image of the target area may be used together. In the related art, when the robot cleaner 200 generates a spatial map by using only LiDAR scan data, a space may be distorted. This will be described in detail with reference to FIG. 2.

FIG. 2 is a diagram for comparing a spatial map generated according to an embodiment of the disclosure with a spatial map generated using only LIDAR scan data in the related art. FIG. 2 shows spatial maps 10 and 20 generated for the same space. A spatial map 10 on the left side is generated according to an embodiment of the disclosure, and an old spatial map 20 on the right side is generated using only LiDAR scan data in the related art.

When the robot cleaner 200 generates the old spatial map 20 by using only LiDAR scan data, distortion of a space may occur, because various objects (e.g., furniture and home appliances) may exist in space, and, because the robot cleaner 200 is unable to distinguish whether a spot where a laser pulse is reflected is a wall of the space or an object, based on the LiDAR scan data alone, and the robot cleaner 200 may recognize an object as the wall of the space and generate the old spatial map 20. In addition, according to an embodiment of the disclosure, the robot cleaner 200 obtains LiDAR scan data by performing a LiDAR scan at a low height, and there is a high probability that an object exists at a height (e.g., a height close to the floor) where the LiDAR scan is performed. Therefore, the old spatial map 20 generated based on only the LiDAR scan data may be different from the actual structure (floor plan) of the space.

Referring to FIG. 2, the border of the old spatial map 20 is set so as not to include first through sixth areas 21 through 26 where furniture or home appliances are located. On the other hand, the border of the spatial map 10 generated according to an embodiment of the disclosure is set to include all of the first through sixth areas 21 through 26 where furniture or home appliances are located, and thus the structure of the actual space is reflected in the spatial map 10 as accurately as possible.

According to an embodiment of the disclosure, the robot cleaner 200 may use captured images of target areas in the space (in particular, the first through sixth areas 21 through 26) to generate the spatial map 10. The robot cleaner 200 may primarily generate the old spatial map 20 by using only the LiDAR scan data, and then may secondarily correct the old spatial map 20 by using the captured images of the first through sixth areas 21 through 26 where objects are located. Alternatively, the robot cleaner 200 may generate the spatial map 10 by using both the LiDAR scan data and the captured images from the beginning.

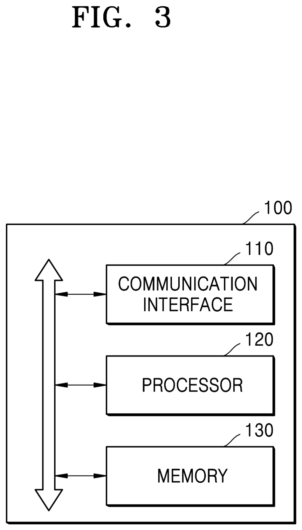

FIG. 3 is a block diagram for explaining the structure of a server included in a system for generating a spatial map, according to an embodiment of the disclosure. Referring to FIG. 3, the server 100 according to an embodiment of the disclosure may include a communication interface 110, a processor 120, and a memory 130. However, the components of the server 100 are not limited to the above-described examples, and the server 100 may include more or fewer components than the aforementioned components. Some or all of the communication interface 110, the processor 120, and the memory 130 may be implemented as a single chip. According to an embodiment of the disclosure, the server 100 may be a home IoT server that controls IoT devices in the home, such as the robot cleaner 200.

The communication interface 110 is a component for transmitting and receiving signals (e.g., control commands and data) with an external device by wire or wirelessly, and may be realized to include a communication chipset that supports various communication protocols. The communication interface 110 may receive a signal from an external source and output the signal to the processor 120, or may transmit a signal output by the processor 120 to an external source. The server 100 may communicate with the robot cleaner 200 or the mobile terminal 300 through the communication interface 110.

The processor 120 is a component that controls a series of processes so that the server 100 operates according to embodiments described below, and may include one or a plurality of processors. The one or plurality of processors may be a general-purpose processor such as a central processing unit (CPU), an application processor (AP), or a digital signal processor (DSP), a graphics-only processor such as a graphics processing unit (GPU) or a vision processing unit (VPU), or an AI-only processor such as a neural processing unit (NPU). For example, when the one or plurality of processors are artificial intelligence (AI)-only processors, the AI-only processors may be designed in a hardware structure specialized for processing a specific AI model.

The processor 120 may write data to the memory 130 or read data stored in the memory 130, and, in particular, may execute a program stored in the memory 130 to process data according to a predefined operation rule or an AI model. Accordingly, the processor 120 may perform operations described in the following embodiments, and operations described as being performed by the server 100 in the following embodiments may be considered as being performed by the processor 120 unless otherwise specified.

The memory 130, which is a component for storing various programs or data, may be composed of storage media, such as read-only memory (ROM), random access memory (RAM), hard disks, compact disc (CD)-ROM, and digital versatile discs (DVDs), or a combination thereof. The memory 130 may not exist separately but may be included in the processor 120. The memory 130 may be implemented as a volatile memory, a non-volatile memory, or a combination of a volatile memory and a non-volatile memory. The memory 130 may store a program for performing operations according to embodiments of the disclosure that will be described later. The memory 130 may provide stored data to the processor 120, in response to a request by the processor 120.

The server 100 may receive the spatial map 10 from the robot cleaner 200 through the communication interface 110, and may store the received spatial map 10 in the memory 130 or transmit the received spatial map 10 to the mobile terminal 300 through the communication interface 110. Alternatively, the server 100 may generate the spatial map 10 by using information (LiDAR scan data and captured images) received from the robot cleaner 200 through the communication interface 110, and may store the generated spatial map 10 in the memory 130 or transmit the generated spatial map 10 to the mobile terminal 300 through the communication interface 110.

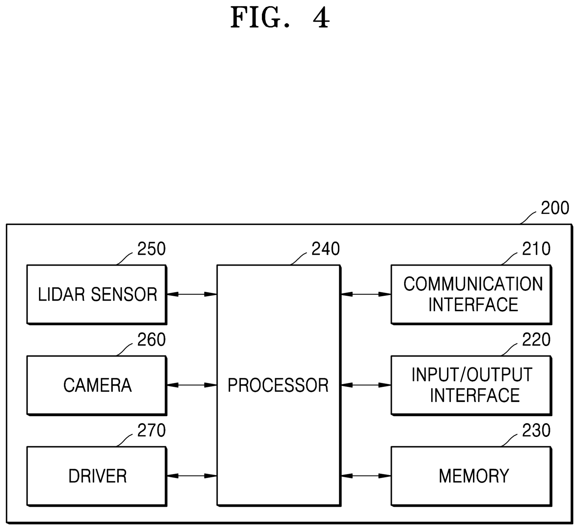

FIG. 4 is a block diagram for explaining the structure of a robot cleaner included in a system for generating a spatial map, according to an embodiment of the disclosure. Referring to FIG. 4, the robot cleaner 200 according to an embodiment of the disclosure may include a communication interface 210, an input/output interface 220, a memory 230, a processor 240, a LiDAR sensor 250, a camera 260, and a driver 270. However, the components of the robot cleaner 200 are not limited to the above-described examples, and the robot cleaner 200 may include more or fewer components than the aforementioned components. Some or all of the communication interface 210, the input/output interface 220, the memory 230, and the processor 240 may be implemented as a single chip.

The communication interface 210 is a component for transmitting and receiving signals (e.g., control commands and data) with an external device by wire or wirelessly, and may be realized to include a communication chipset that supports various communication protocols. The communication interface 210 may receive a signal from an external source and output the signal to the processor 240, or may transmit a signal output by the processor 240 to an external source. The robot cleaner 200 may communicate with the server 100 via the communication interface 210. According to an embodiment of the disclosure, the robot cleaner 200 may transmit LiDAR scan data obtained through the LiDAR sensor 250, which will be described later, and captured images obtained through the camera 260, which will be described later, to the server 100 or the mobile terminal 300 through the communication interface 210. Alternatively, the robot cleaner 200 may transmit the spatial map 10 generated using the LiDAR scan data and the captured images to the server 100 or the mobile terminal 300 through the communication interface 210.

The input/output interface 220 may include an input interface (e.g., a touch screen, a hard button, and a microphone) for receiving control commands or information from a user, and an output interface (e.g., a display panel and a speaker) for displaying an execution result of an operation under a control by the user or a state of the robot cleaner 200.

The memory 230, which is a component for storing various programs or data, may be composed of storage media, such as read-only memory (ROM), random access memory (RAM), hard disks, compact disc (CD)-ROM, and digital versatile discs (DVDs), or a combination thereof. The memory 230 may not exist separately but may be included in the processor 240. The memory 230 may be implemented as a volatile memory, a non-volatile memory, or a combination of a volatile memory and a non-volatile memory. The memory 230 may store a program for performing operations according to embodiments of the disclosure that will be described later. The memory 230 may provide stored data to the processor 240, in response to a request by the processor 240.

The processor 240 is a component that controls a series of processes so that the robot cleaner 200 operates according to embodiments described below, and may include one or a plurality of processors. The one or plurality of processors may be a general-purpose processor such as a central processing unit (CPU), an application processor (AP), or a digital signal processor (DSP), a graphics-only processor such as a graphics processing unit (GPU) or a vision processing unit (VPU), or an AI-only processor such as a neural processing unit (NPU). For example, when the one or plurality of processors are AI-only processors, the AI-only processors may be designed in a hardware structure specialized for processing a specific AI model.

The processor 240 may write data to the memory 230 or read data stored in the memory 230, and, in particular, may execute a program stored in the memory 230 to process data according to a predefined operation rule or an AI model. Accordingly, the processor 240 may perform operations described in the following embodiments, and operations described as being performed by the robot cleaner 200 in the following embodiments may be considered as being performed by the processor 240 unless otherwise specified.

The LiDAR sensor 250 may be used by the robot cleaner 200 to scan a distance (depth) to a wall or object of a surrounding space. The robot cleaner 200 may measure depths of a plurality of areas included in the space by using the LiDAR sensor 250, and may generate a spatial map based on the measured depth values.

The camera 260 may be used by the robot cleaner 200 to photograph the surrounding space. The robot cleaner 200 may include the camera 260 to recognize an object (e.g., an obstacle) in front. According to an embodiment of the disclosure, the robot cleaner 200 may increase the accuracy of the spatial map by using a captured image of the surrounding space obtained by the camera 260 when generating a spatial map.

The driver 270 is a component that provides power necessary for the robot cleaner 200 to perform a cleaning operation. The robot cleaner 200 may move within the space due to a driving force provided by the driver 270, and may perform a cleaning operations (e.g., suction). According to an embodiment of the disclosure, the driver 270 may include, for example, a motor and a battery.

Embodiments in which the robot cleaner 200 generates a spatial map by using the LiDAR scan data and the captured images will now be described in detail.

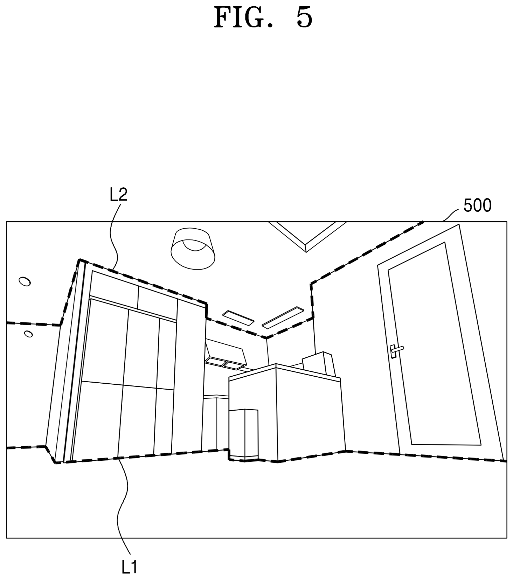

FIG. 5 is a view for describing objectives and major features of a spatial map generating method according to an embodiment of the disclosure. FIG. 5 shows a captured image 500 of a target area included in a space.

The captured image 500 of FIG. 5 includes a scan line (hereinafter, a first line) L1 corresponding to a first height and a scan line (hereinafter, a 'second line') L2 corresponding to a second height.

According to an embodiment of the disclosure, the robot cleaner 200 may scan the target area by using the LiDAR sensor 250 to measure depths of a plurality of spots located on the first line L1 close to the floor (e.g., distances from the LiDAR sensor 250 to the plurality of spots). Therefore, the LiDAR scan data obtained by the robot cleaner 200 according to an embodiment of the disclosure may include depth values for the plurality of spots located on the first line L1.

Referring to FIG. 5, because objects (e.g., an island table) exist on the first line L1, when the robot cleaner 200 generates a spatial map by using only the LiDAR scan data obtained for the first line L1, the border of the spatial map may be determined along the surfaces of the objects rather than the wall of the space. In other words, when the robot cleaner 200 generates the spatial map by using only LIDAR scan data obtained at a height close to the floor, the border of the spatial map may be distorted due to the objects in the space.

The robot cleaner 200 according to an embodiment of the disclosure may obtain (estimate) depth values for the plurality of spots located on the second line L2 at a height where no object exists, and may determine the border of the spatial map, based on the obtained depth values. Therefore, the spatial map generated by the robot cleaner 200 according to an embodiment of the disclosure may accurately reflect the structure of the actual space.

The robot cleaner 200 may use the captured image 500 of the target area to obtain the depth values for the plurality of spots located on the second line L2. A method, performed by the robot cleaner 200, of obtaining the depth values for the plurality of spots located on the second line L2 by using the captured image 500 will be described below in detail with reference to the drawings.

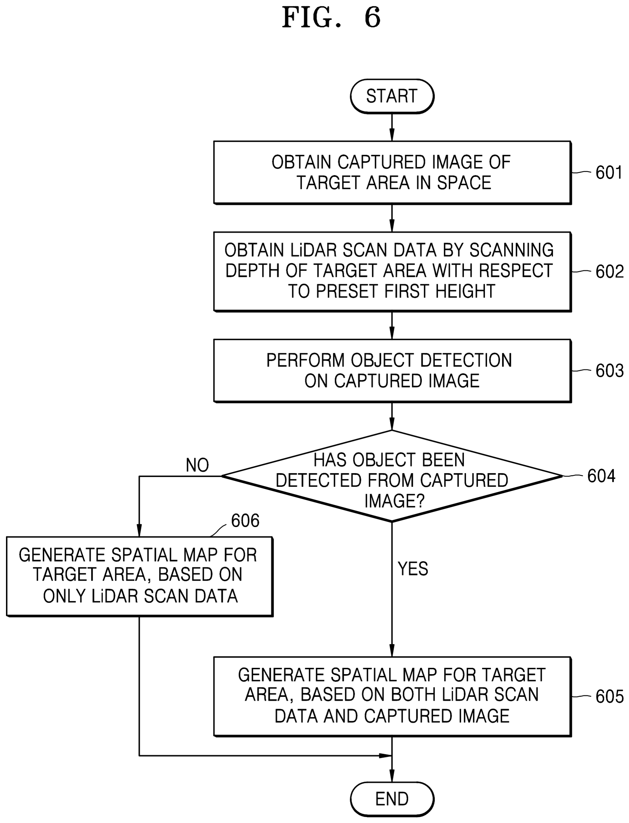

A process in which the robot cleaner 200 generates a spatial map will now be described with reference to the flowcharts of FIGS. 6 through 15, and also will be described by further referring to necessary drawings for each operation.

8

1. Description of the overall process of generating a spatial map (FIGS. 6 through 9)

FIG. 6 is a flowchart of a method of generating a spatial map, according to an embodiment of the disclosure.

In operation 601, the robot cleaner 200 may obtain a captured image of a target area in a space. Then, in operation 602, the robot cleaner 200 may obtain LiDAR scan data by scanning a depth of the target area with respect to a preset first height.

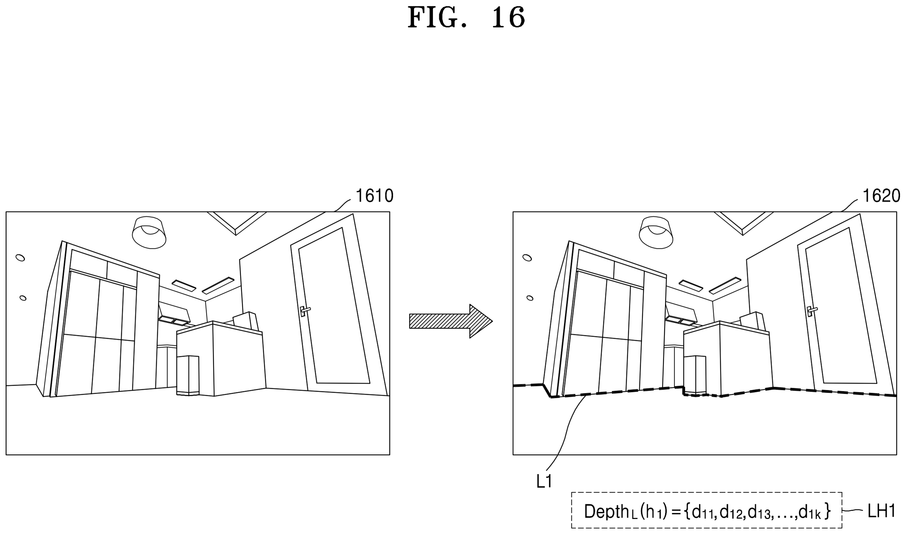

Operations 601 and 602 will now be described in more detail with reference to FIG. 16. FIG. 16 is a view for explaining an operation of obtaining LiDAR scan data for a target area, in a process of generating a spatial map, according to an embodiment of the disclosure.

A first image 1610 of FIG. 16 corresponds to a captured image obtained by the robot cleaner 200 photographing the target area through the camera 260. According to an embodiment of the disclosure, the robot cleaner 200 may scan a depth of the target area with respect to a first height $h_1$ previously set through the LiDAR sensor 250, and, as a result, may obtain LiDAR scan data LH1 including depth values $d_{11}$, $d_{12}$, $d_{13}$, ..., and $d_{1k}$ of the plurality of spots located on the first line L1 at the first height $h_1$. A second image 1620 of FIG. 16 shows the first line L1 connecting the spots corresponding to the depth values $d_{11}$, $d_{12}$, $d_{13}$, ..., and $d_{1k}$ included in the LiDAR scan data LH1 to one another.

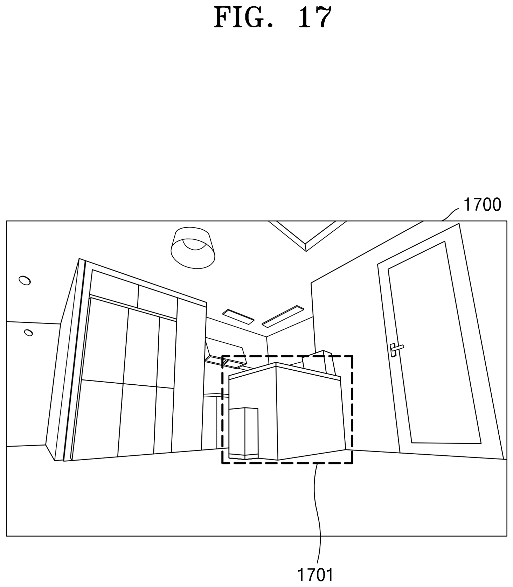

Referring back to FIG. 6, in operation 603, the robot cleaner 200 may perform object detection on the captured image to determine whether the object is in the capture image or not. FIG. 17 is a view for explaining an operation of detecting an object from the captured image of the target area, in the process of generating a spatial map, according to an embodiment of the disclosure.

Referring to FIG. 17, the robot cleaner 200 may perform object detection (object recognition) on a captured image 1700 of the target area, and, as a result, objects (e.g., an island table and a trash can) 1701 may be detected.

When no objects are detected from the target area, the robot cleaner 200 may generate an accurate spatial map even when only using LiDAR scan data obtained through the LiDAR sensor 250. Therefore, according to an embodiment of the disclosure, the robot cleaner 200 may perform object detection on the captured image 1700 of the target area to thereby determine whether to use the captured image 1700 when generating a spatial map.

The type of object identified by the robot cleaner 200 by performing object recognition on the captured image in operation 603 may be reflected when displaying the type of object on the spatial map later.

Referring back to FIG. 6, in operation 604, the robot cleaner 200 may determine whether an object has been detected from the captured image. When an object has been detected from the captured image, the robot cleaner 200 may proceed to operation 605 and generate a spatial map for the target area, based on both the LiDAR scan data and the captured image. On the other hand, when an object has been detected from the captured image, the robot cleaner 200 may proceed to operation 606 and generate a spatial map for the target area, based on only the LiDAR scan data.

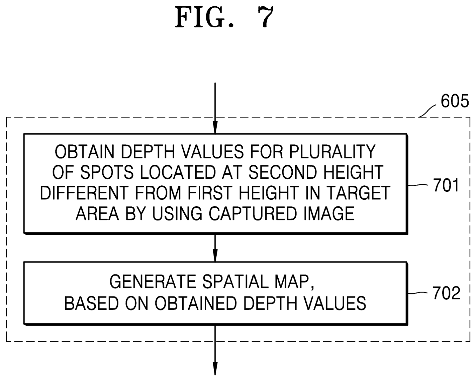

Detailed operations included in operation 605 of FIG. 6 will now be described in detail with reference to the flowcharts of FIGS. 7 through 15.

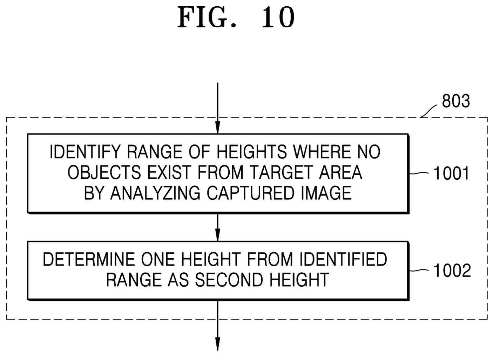

FIG. 7 is a flowchart for explaining sub-operations included in operation 605 of FIG. 6. Referring to FIG. 7, in operation 701, the robot cleaner 200 may obtain depth values for a plurality of spots located at a second height different from the first height in the target area by using the captured image. In other words, the robot cleaner 200 may obtain information about the depth of the target area corresponding to the second height, which is different from the first height. Referring to FIG. 5, the robot cleaner 200 may obtain depth values for a plurality of spots located on the second line L2 of the second height different from the first height (e.g., the height of the first line L1). The robot cleaner 200 may determine, as the second height (optimal height), a height at which no objects exist (or a height at which no objects are expected to exist) in the target area, and a detailed method, performed by the robot cleaner 200, of determining the second height will be described in detail below with reference to FIGS. 10 through 12.

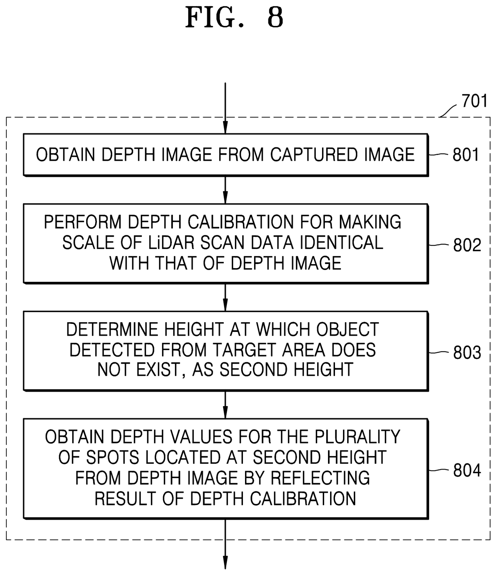

Operation 701 will now be described in more detail with reference to FIG. 8.

FIG. 8 is a flowchart for explaining sub-operations included in operation 701 of FIG. 7. Referring to FIG. 8, in operation 801, the robot cleaner 200 may obtain a depth image from the captured image of the target area. Then, in operation 802, the robot cleaner 200 may perform depth calibration for making the scale of the LiDAR scan data identical to that of the depth image.

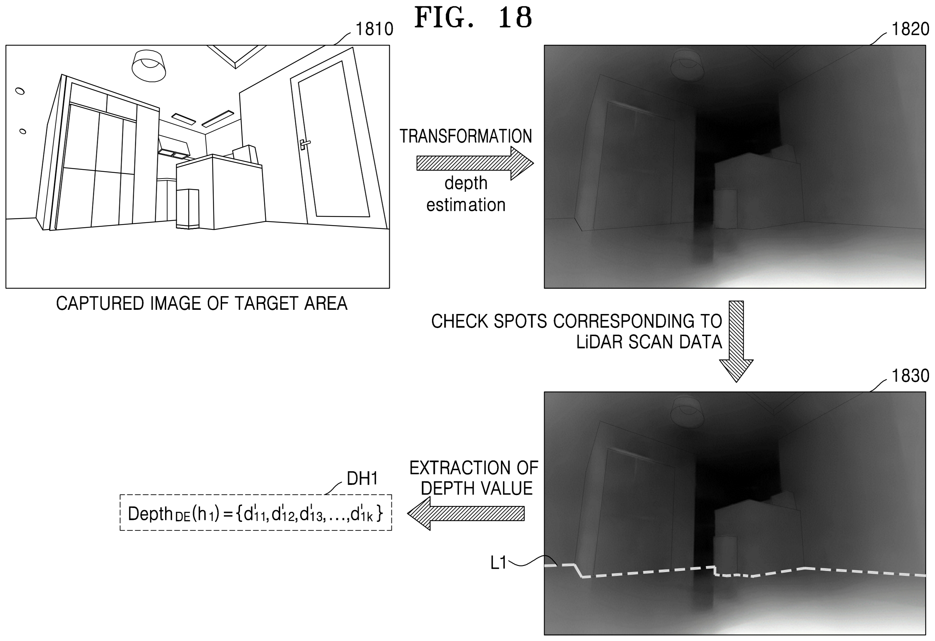

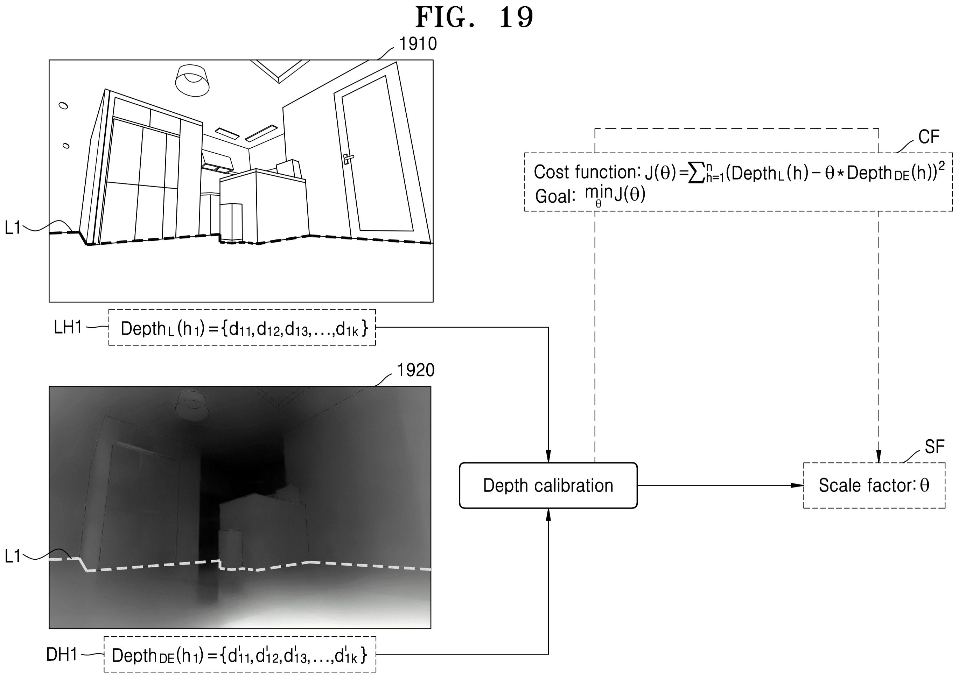

Operations 801 and 802 of FIG. 8 will be described in detail with reference to FIGS. 18 and 19. FIG. 18 is a view for explaining an operation of obtaining the depth image from the captured image and obtaining depth values from the depth image, in a process of generating a spatial map, according to an embodiment of the disclosure. FIG. 19 is a view for explaining an operation of performing depth calibration by using depth values obtained from the LiDAR scan data and the depth image, in a process of generating a spatial map, according to an embodiment of the disclosure.

A first image 1810 of FIG. 18 corresponds to the captured image of the target area obtained by the robot cleaner 200, and a second image 1820 corresponds to a depth image obtained by the robot cleaner 200 from the captured image. The robot cleaner 200 may transform the captured image (first image 1810) into the depth image (second image 1820) by performing depth estimation on the captured image (first image 1810).

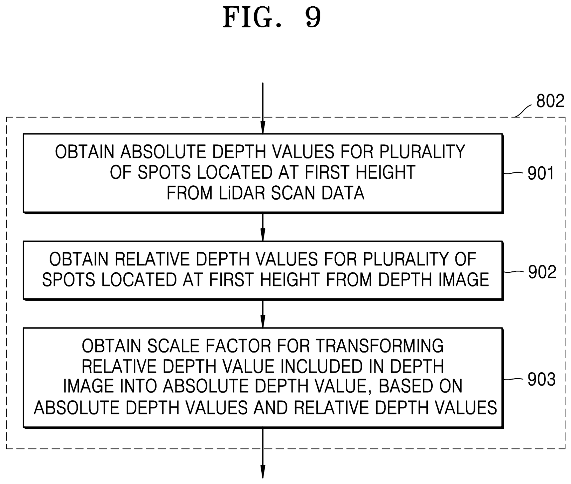

Before explaining the sub-operations included in operation 802 of FIG. 8 with reference to FIG. 9, a reason why the robot cleaner 200 performs depth calibration will be explained first.

From the depth image, the robot cleaner 200 may only know a relative depth (distance) between a plurality of spots included in the depth image. According to an embodiment of the disclosure, the robot cleaner 200 may need to be able to check (estimate) an absolute depth (distance) of spots included in the depth image in order to generate or correct the spatial map. Accordingly, the robot cleaner 200 may perform calibration using the LiDAR scan data in order to check (estimate) the absolute depth (distance) of the spots included in the depth image, and this is referred to as depth calibration. In other words, depth calibration may include an operation for transforming the scale of the depth image according to the LiDAR scan data.

The robot cleaner 200 may extract absolute depth information from the depth image by performing calibration on relative depth information for the plurality of spots included in the depth image. In other words, by performing depth calibration, the robot cleaner 200 may obtain a scale factor for transforming relative depth values included in the depth image into absolute depth values obtainable through LiDAR scanning.

A specific method, performed by the robot cleaner 200, of performing depth calibration by using the depth image obtained from the captured image and the LiDAR scan data will be described in detail below.

FIG. 9 is a flowchart for explaining sub-operations included in operation 802 of FIG. 8.

In operation 901, the robot cleaner 200 may obtain absolute depth values for the plurality of spots located at the first height from the LiDAR scan data. Referring to FIG. 19, the robot cleaner 200 may obtain absolute depth values $d_{11}$, $d_{12}$, $d_{13}$, ..., and $d_{1k}$ for a plurality of spots located on the first line L1 at the first height $h_1$ displayed on a first image 1910 from the LiDAR scan data LH1.

In operation 902, the robot cleaner 200 may obtain relative depth values for the plurality of spots (spots corresponding to the depth values included in the LiDAR scan data) located at the first height $h_1$ from the depth image. Referring to FIG. 18, the first line L1 at the first height $h_1$ is displayed on a third image 1830, and spots corresponding to the LiDAR scan data (e.g., spots corresponding to the depth values included in the LiDAR scan data) are located on the first line L1. The robot cleaner 200 may obtain relative depth information DH1 including relative depth values $d'_{11}$, $d'_{12}$, $d'_{13}$, ..., and $d'_{1k}$ for the plurality of spots located on the first line L1 from the depth image (third image 1830).

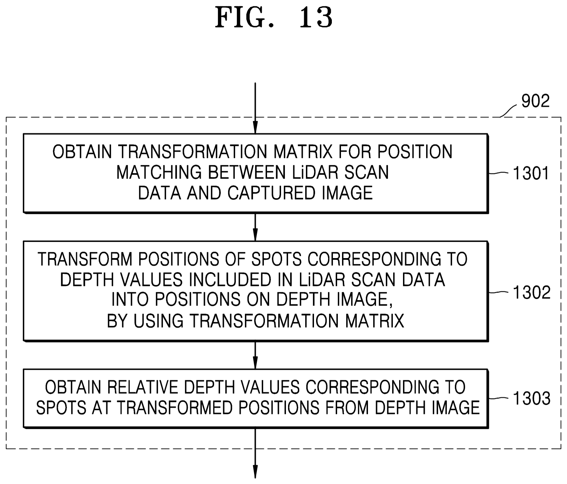

A specific method, performed by the robot cleaner 200, of checking the plurality of spots (e.g., spots corresponding to the LiDAR scan data) located on the first line L1 on the depth image will now be described in detail with reference to FIGS. 13 through 15.

In operation 903, the robot cleaner 200 may obtain a scale factor θ for transforming a relative depth value included in the depth image into an absolute depth value, based on the absolute depth values and the relative depth values.

Referring to FIG. 19, the robot cleaner 200 may perform depth calibration, based on the absolute depth values $d_{11}$, $d_{12}$, $d_{13}$, ..., and $d_{1k}$ obtained from the LiDAR scan data LH1 and the relative depth values $d'_{11}$, $d'_{12}$, $d'_{13}$, ..., and $d'_{1k}$ obtained from the relative depth information DH1. In detail, the robot cleaner 200 may search for the scale factor θ that minimizes the value of a cost function expressed in Equation 1 below.

[Equation 1]

$$J(\theta) = \sum_{h=1}^{n}(Depth_L(h) - \theta * Depth_{DE}(h))^2$$

Referring back to FIG. 8, in operation 803, the robot cleaner 200 may determine the height at which an object detected from the target area does not exist, as the second height $h_2$, that is, an optimal height. Operation 803 will be described in detail below with reference to FIGS. 10 through 12. According to an embodiment of the disclosure, operation 803 may be followed by operation 802.

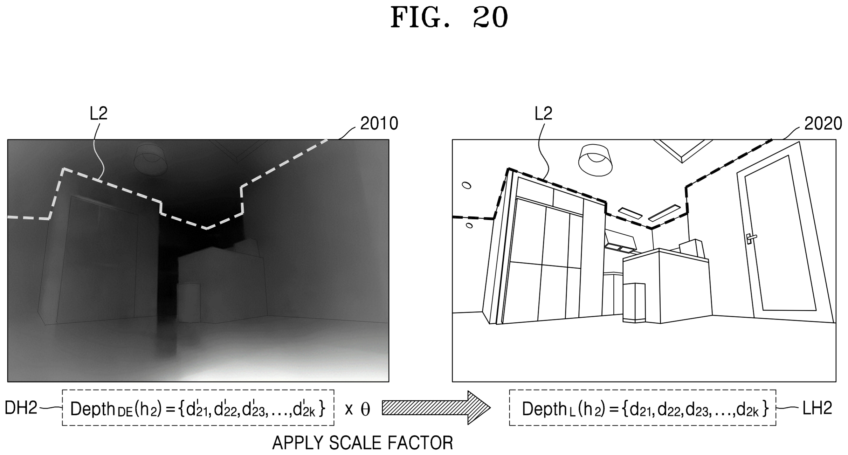

In operation 804, the robot cleaner 200 may reflect a result of the depth calibration to obtain depth values (absolute depth values) for the plurality of spots located at the second height $h_2$ from the depth image. Operation 804 will be described in detail with reference to FIG. 20.

FIG. 20 is a view for explaining an operation of obtaining depth values of spots located at the optimal height, in a process of generating a spatial map, according to an embodiment of the disclosure. As described above, it is assumed that the second height $h_2$ determined in operation 803 corresponds to the optimal height. The robot cleaner 200 may obtain absolute depth values for the plurality of spots located on the second line L2 at the second height $h_2$ from a depth image 2010 according to one of the following two methods.

According to a first method, the robot cleaner 200 may obtain relative depth information DH2 corresponding to the second height $h_2$ from the depth image 2010, and may transform the relative depth information DH2 into absolute depth information LH2 by using the scale factor θ. The relative depth information DH2 corresponding to the second height $h_2$ includes relative depth values $d'_{21}$, $d'_{22}$, $d'_{23}$, ..., and $d'_{2k}$ for the plurality of spots for the second line L2. The robot cleaner 200 may obtain the absolute depth information LH2 corresponding to the second height $h_2$ by multiplying the relative depth values $d'_{21}$, $d'_{22}$, $d'_{23}$, ..., and $d'_{2k}$ for the plurality of spots for the second line L2 by the scale factor θ. In other words, the absolute depth information LH2 corresponding to the second height $h_2$ may be determined based on a product of the relative depth values $d'_{21}, d'_{22}, d'_{23}, ...,$ and $d'_{2k}$ for the plurality of spots for the second line L2 and the scale factor $\theta$. The absolute depth information LH2 corresponding to the second height $h_2$ includes absolute depth values $d_{21}, d_{22}, d_{23}, ...,$ and $d_{2k}$ for the plurality of spots for the second line L2.

According to a second method, the robot cleaner 200 may transform the scale of the depth image 2010 by using the scale factor $\theta$ and store a result of the transformation, and then, when the second height $h_2$ is determined, may obtain depth values for the plurality of spots included in the second line L2 (e.g., the absolute depth values $d_{21}, d_{22}, d_{23}, ...,$ and $d_{2k}$) from a scale-transformed depth image 2010. In other words, the robot cleaner 200 may multiply the relative depth values of all of the spots included in the depth image 2010 by the scale factor $\theta$, and then, when the second height $h_2$ is determined, may obtain the depth values for the plurality of spots included in the second line L2 (e.g., the absolute depth values $d_{21}, d_{22}, d_{23}, ...,$ and $d_{2k}$) from the scale-transformed depth image 2010.

Referring back to FIG. 7, in operation 702, the robot cleaner 200 may generate the spatial map, based on the obtained depth values. That is, the robot cleaner 200 may generate the spatial map, based on the absolute depth values for the plurality of spots located at the second height $h_2$.

2. Specific description of how to determine the optimal height (second height) (operation 803 of FIG. 8 - FIGS. 10 through 12 and FIGS. 24 and 25)

As described above, the robot cleaner 200 may determine, as the optimal height, the height at which no objects exist in the target area, by performing a dynamic height scan. A method, performed by the robot cleaner 200, of determining the optimal height (second height), according to an embodiment of the disclosure, will now be described in detail with reference to FIGS. 10 through 12, 24, and 25.

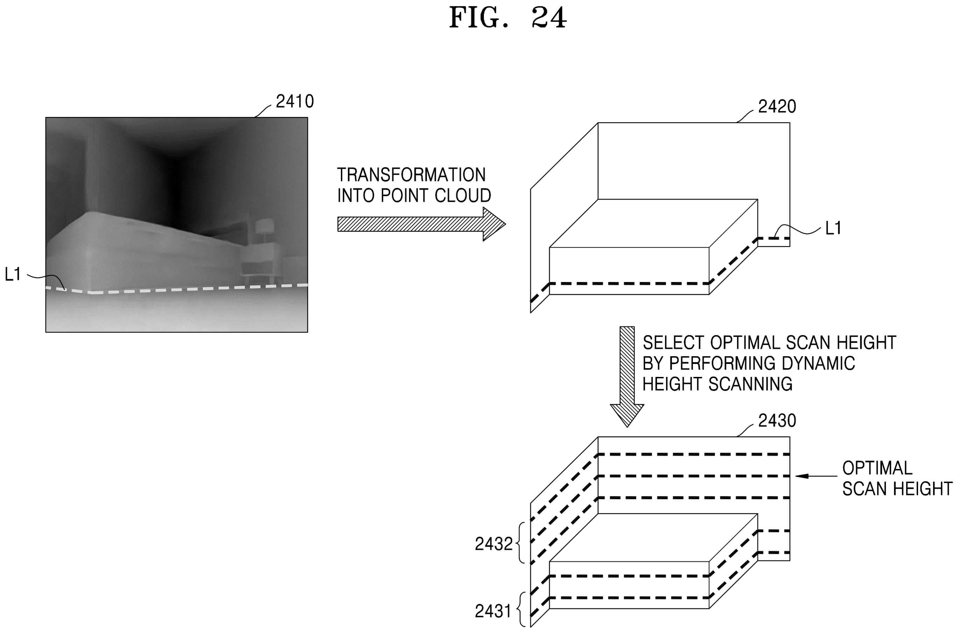

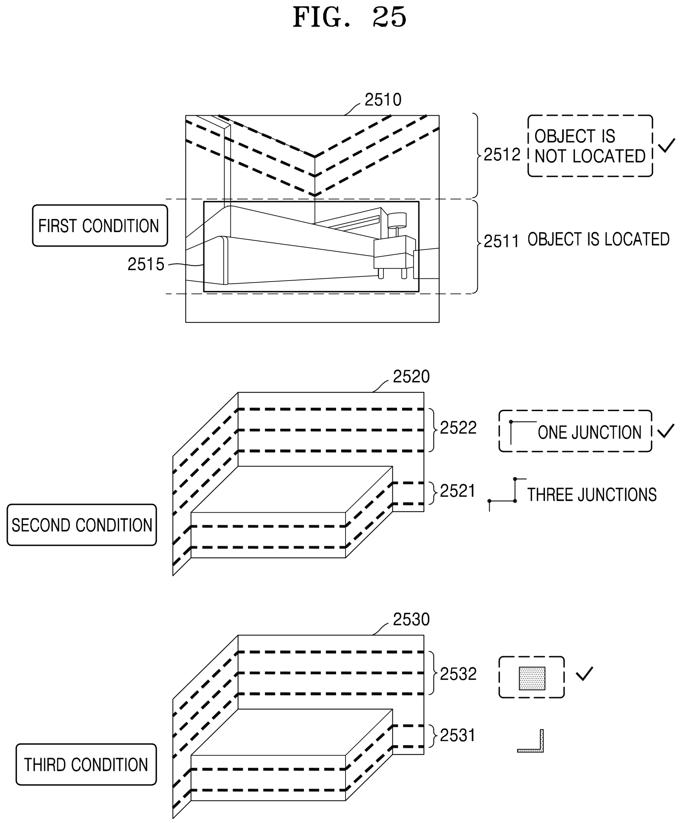

For reference, in order to clearly explain the conditions and method of dynamic height scanning, FIGS. 24 and 25 show a target area that is different from the target area used in the description of the above-described embodiments.

FIG. 24 is a view for explaining an operation of determining an optimal height, in a process of generating a spatial map, according to an embodiment of the disclosure.

Referring to FIG. 24, the robot cleaner 200 may obtain a depth image for the target area in a first operation 2410, and may transform the depth image into a point cloud in a second operation 2420. In FIG. 24, the first line L1 corresponding to the LiDAR scan data is displayed on the depth image of the first operation 2410 and the point cloud of the second operation 2420. Because an object (e.g., a bed) is located on the first line L1, the robot cleaner 200 may determine a height different from the height of the first line L1 as the optimal height.

In a third step 2430, the robot cleaner 200 may determine, as the optimal height, a height at which no object exists. A plurality of scan lines are displayed on the point cloud of the third operation 2430. Scan lines included in a first range 2431 are located at a height where an object exists, and scan lines included in a second range 2432 are located at the height where no objects exist. The robot cleaner 200 may search for the second range 2432 where no objects are located, by using various conditions that are described below, and may determine, as the optimal height, the height of one of the scan lines included in the second range 2432.

FIG. 25 is a view for explaining three conditions used to select an optimal height, in a process of generating a spatial map, according to an embodiment of the disclosure. According to an embodiment of the disclosure, the robot cleaner 200 may determine the height at which no object exists as the optimal height, based on at least one of the three conditions shown in FIG. 25. The first through third conditions shown in FIG. 25 may correspond to the flowcharts of FIGS. 10 through 12, respectively. Although the three conditions are described separately below, the robot cleaner 200 may determine the optimal height by considering two or more of the three conditions together. In summary, the robot cleaner 200 may determine the optimal height by considering only one of the three conditions shown in FIG. 25, or may determine the optimal height by sequentially considering two or more of the three conditions.

According to the first condition, the robot cleaner 200 may detect an object 2515 from a captured image 2510, and may determine the optimal height from a second range 2512 excluding a first range 2511 where the detected object 2515 is located. According to an embodiment of the disclosure, the robot cleaner 200 may set a plurality of scan lines at regular intervals in the second range 2512 (e.g., set scan lines at regular height intervals from the bottom), and may determine the height of any one of the plurality of scan lines as the optimal height. For example, the robot cleaner 200 may select one of the plurality of scan lines included in the second range 2512 according to a preset condition (e.g., selection of a highest scan line), and may determine the height of the selected scan line as the optimal height. Alternatively, for example, the robot cleaner 200 may select one scan line from among the plurality of scan lines included in the second range 2512 according to at least one of the second condition or the third condition, which will be described later, and may determine the height of the selected scan line as the optimal height.

According to the second condition, the robot cleaner 200 may set a plurality of scan lines with different heights on a point cloud 2520 (e.g., set scan lines at regular height intervals from the bottom), and may divide the range, based on the number of junctions of the plurality of scan lines. The junction of a scan line may refer to a point where the scan line breaks.

According to an embodiment of the disclosure, the robot cleaner 200 may alleviate noise by approximating each scan line by applying a Ramer-Douglas-Peucker algorithm to the scan line and then calculating the number of junctions.

In the embodiment shown in FIG. 25, the robot cleaner 200 may classify a height including scan lines with three junctions into a first range 2521, and may classify a height including scan lines with one junctions into a second range 2522. In general, when an object exists on a scan line, the number of junctions included in the scan line is highly likely to increase. Therefore, according to an embodiment of the disclosure, the robot cleaner 200 may determine, as the optimal height, the height of one of the scan lines included in the second range 2522 with a small number of junctions. For example, the robot cleaner 200 may select one of the plurality of scan lines included in the second range 2512 according to a preset condition (e.g., selection of a highest scan line), and may determine the height of the selected scan line as the optimal height. Alternatively, for example, the robot cleaner 200 may select one scan line from among the plurality of scan lines included in the second range 2522 according to at least one of the above-described first condition or the third condition to be described later, and may determine the height of the selected scan line as the optimal height.

According to an embodiment of the disclosure, the robot cleaner 200 may determine a border of the spatial map to correspond to each of the plurality of scan lines set on the point cloud 2520, calculate the number of junctions of the determined borders, and then, according to the method described above, may divide the height into a plurality of ranges, based on the number of junctions, and determine the optimal height.

According to an embodiment of the disclosure, the robot cleaner 200 may determine, as the optimal height, the height of a scan line with a minimum number of junctions from among the plurality of scan lines set on the point cloud 2520. Alternatively, according to an embodiment of the disclosure, the robot cleaner 200 may determine a border of the spatial map to correspond to each of the plurality of scan lines set on the point cloud 2520, and may determine, as the optimal height, a height corresponding to a border with a minimum number of junctions from among the determined borders.

According to the third condition, the robot cleaner 200 may set a plurality of scan lines with different heights on a point cloud 2530 (e.g., set scan lines at regular height intervals of a height from the bottom), and may determine the optimal height, based on the areas of cross-sections corresponding to the plurality of scan lines. The area of a cross-section corresponding to a scan line may refer to the area of a cross-section where a spot where the target area is photographed is used as one vertex and an outline is formed according to the scan line. An example of a cross-section corresponding to each scan line is shown in FIG. 25.

In the embodiment shown in FIG. 25, the robot cleaner 200 may classify a height including scan lines with their corresponding cross-sections having relatively small areas into a first range 2531, and may classify a height including scan lines with their corresponding cross-sections having relatively large areas into a second range 2532. When an object exists on a scan line, the area of a cross-section corresponding to the scan line may be likely to increase. Therefore, according to an embodiment of the disclosure, the robot cleaner 200 may determine, as the optimal height, the height of one of the scan lines included in the second range 2532 with its corresponding cross-section having a large area. For example, the robot cleaner 200 may select one of the plurality of scan lines included in the second range 2532 according to a preset condition (e.g., selection of a highest scan line), and may determine the height of the selected scan line as the optimal height. Alternatively, for example, the robot cleaner 200 may select one scan line from among the plurality of scan lines included in the second range 2532 according to at least one of the above-described first condition or the above-described third condition, and may determine the height of the selected scan line as the optimal height.

According to an embodiment of the disclosure, the robot cleaner 200 may calculate the area of a cross-section corresponding to each of the plurality of scan lies set on the point cloud 2530, and may determine, as the optimal height, the height of a scan line with its corresponding cross-section having a maximum area. Alternatively, according to an embodiment of the disclosure, the robot cleaner 200 may calculate respective areas of the spatial map for a plurality of heights, based on the depth image, and determine a height corresponding to a maximum area from among the calculated areas as the optimal height.

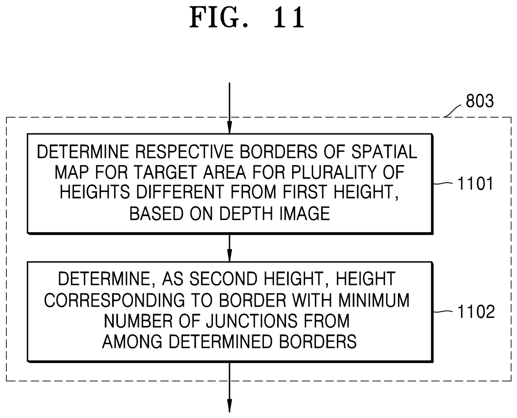

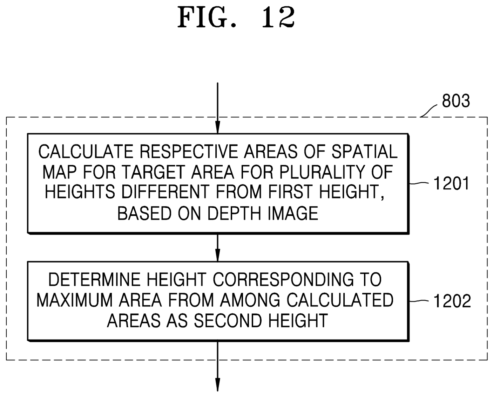

FIGS. 10 through 12 are flowcharts for explaining sub-operations included in operation 803 of FIG. 8. FIG. 10 may correspond to the first condition of FIG. 25, FIG. 11 may correspond to the second condition of FIG. 25, and FIG. 12 may correspond to the third condition of FIG. 25. Accordingly, the three first through third conditions described above with reference to FIG. 25 are equally applicable to the embodiments of FIGS. 10 through 12.

Referring to FIG. 10, in operation 1001, the robot cleaner 200 may analyze the captured image to identify the range of heights where no objects exist from the target area. In operation 1002, the robot cleaner 200 may determine one height from the identified range as the second height (optimal height).

Referring to FIG. 11, in operation 1101, the robot cleaner 200 may determine respective borders of the spatial map for the target area for a plurality of heights different from the first height, based on the depth image. In operation 1102, the robot cleaner 200 may determine, as the second height (optimal height), a height corresponding to a border with a minimum number of junctions from among the determined borders.

Referring to FIG. 12, in operation 1201, the robot cleaner 200 may calculate respective areas of the spatial map for the target area for a plurality of heights different from the first height, based on the depth image. In operation 1202, the robot cleaner 200 may determine a height corresponding to a maximum area from among the calculated areas as the second height (optimal height).

3. Detailed description of a method of obtaining relative depth values (relative depth values corresponding to LIDAR scan data) for a plurality of spots located at the first height on the depth image (operation 902 in FIG. 9 -FIGS. 13 through 15 and FIGS. 21 through 23)

As described above, in order to perform depth calibration, relative depth values on the depth image, which correspond to absolute depth values included in the LIDAR scan data, may be used.

A method, performed by the robot cleaner 200 according to an embodiment of the disclosure, of obtaining relative depth values (relative depth values corresponding to LIDAR scan data) for a plurality of points located at the first height (height corresponding to the LIDAR scan data) on the depth image will now be described in detail with reference to FIGS. 13 through 15 and FIGS. 21 through 23. (Description of sub-operations included in operation 902 of FIG. 9) Although three methods are introduced in the disclosure, the robot cleaner 200 may obtain depth values (relative depth values) corresponding to LiDAR scan data from a depth image according to various other methods.

FIG. 13 is a flowchart for explaining sub-operations included in operation 902 of FIG. 9. Referring to FIG. 13, in operation 1301, the robot cleaner 200 may obtain a transformation matrix for position matching between the LiDAR scan data and the captured image. The transformation matrix is a matrix for transforming spots corresponding to depth values included in the LiDAR scan data into positions (e.g., positions of pixels) on the captured image. The transformation matrix may be obtained through factory calibration at a production stage by considering respective positions of the LiDAR sensor 250 and the camera 260 of the robot cleaner 200, or may be obtained through a calibration process using a specific pattern after production of the robot cleaner 200.

In operation 1302, the robot cleaner 200 may transform the positions of spots corresponding to depth values included in the LiDAR scan data into positions (positions of pixels) on the depth image, by using the transformation matrix. In other words, the robot cleaner 200 may use the transformation matrix to check which positions on the depth image a plurality of spots located at the first height correspond to. Then, in operation 1303, the robot cleaner 200 may obtain relative depth values corresponding to the spots at the transformed positions from the depth image.

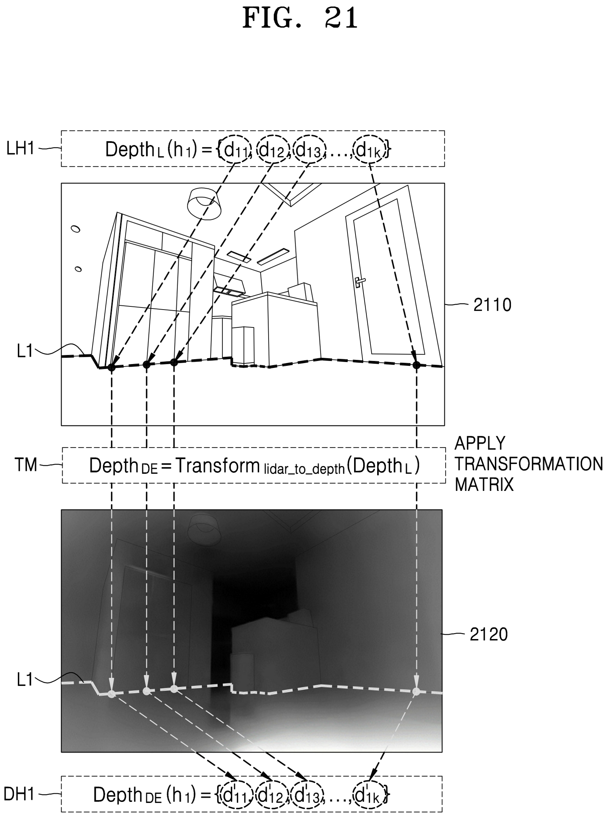

Operations 1302 and 1303 will now be described in detail with reference to FIG. 21.

FIG. 21 is a view for explaining an operation of obtaining the depth values corresponding to the LiDAR scan data from the depth image by using the transformation matrix, in a process of generating a spatial map, according to an embodiment of the disclosure.

Referring to FIG. 21, the first line L1 with the first height $h_1$ corresponding to the LiDAR scan data LH1 is displayed on a first image 2110, which is the captured image of the target area. Points displayed on the first line L1 indicate the spots corresponding to the depth values $d_{11}$, $d_{12}$, $d_{13}$, ..., and $d_{1k}$ included in the LiDAR scan data LH1.

According to an embodiment of the disclosure, the robot cleaner 200 may transform positions of the spots corresponding to the depth values $d_{11}$, $d_{12}$, $d_{13}$, ..., and $d_{1k}$ included in the LiDAR scan data LH1 into positions on a second image 2120, which is the depth image, by using a transformation matrix TM for position matching between the LiDAR scan data LH1 and the captured image (or a depth image transformed therefrom). The second image 2120 is a depth image transformed from the first image 2110.

Note that FIG. 21 illustrates, for convenience of explanation, the positions of the spots corresponding to the depth values $d_{11}$, $d_{12}$, $d_{13}$, ..., and $d_{1k}$ of the LiDAR scan data LH1 on the first image 2110, which is the captured image, but, according to an embodiment of the disclosure, the robot cleaner 200 may obtain the positions of the spots corresponding to the depth values $d_{11}$, $d_{12}$, $d_{13}$, ..., and $d_{1k}$ of the LiDAR scan data LH1 on the first image 2110, using the transformation matrix. That is, the robot cleaner 200 may apply the LiDAR scan data LH1 to the transformation matrix TM, thereby checking the positions (e.g., the positions of pixels) of the spots corresponding to the depth values $d_{11}$, $d_{12}$, $d_{13}$, ..., and $d_{1k}$ of the LiDAR scan data LH1 on the depth image (e.g., the second image 2120).

The first line L1 corresponding to the LiDAR scan data LH1 may be displayed on the second image 2120 of FIG. 21. Points displayed on the first line L1 of the second image 2120 indicate the spots corresponding to the depth values $d_{11}$, $d_{12}$, $d_{13}$, ..., and $d_{1k}$ included in the LiDAR scan data LH1. The robot cleaner 200 may obtain the positions of the points displayed on the first line L1 of the second image 2120 by using the transformation matrix.

When the robot cleaner 200 transforms the positions of the spots corresponding to the depth values $d_{11}$, $d_{12}$, $d_{13}$, ..., and $d_{1k}$ included in the LiDAR scan data LH1 into positions on the depth image (second image 2120), the robot cleaner 200 may extract relative depth values $d'_{11}$, $d'_{12}$, $d'_{13}$, ..., $d'_{1k}$ corresponding to the transformed positions from the depth image (second image 2120).

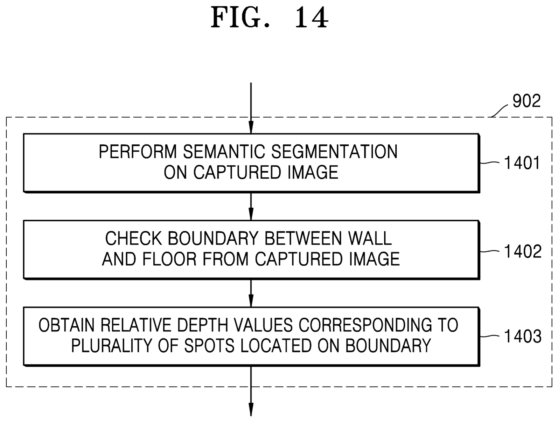

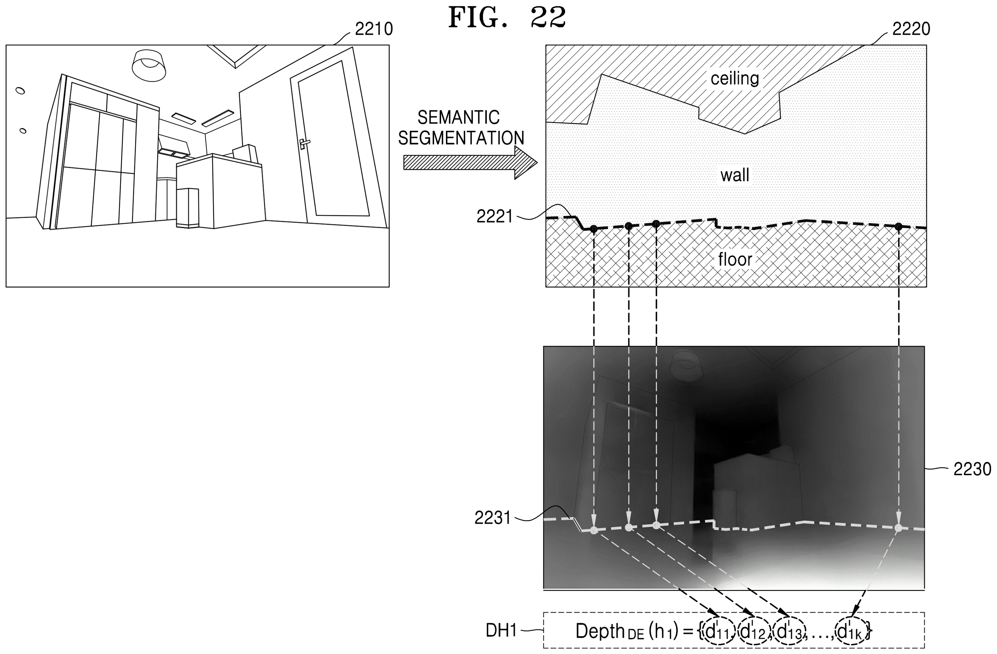

FIG. 14 is a flowchart for explaining sub-operations included in operation 902 of FIG. 9, and FIG. 22 is a view for explaining an operation of obtaining the depth values corresponding to the LiDAR scan data from the depth image through semantic segmentation, in a process of generating a spatial map, according to an embodiment of the disclosure.

Referring to FIG. 14, in operation 1401, the robot cleaner 200 may perform semantic segmentation on a captured image. Referring to FIG. 22, a result of the robot cleaner 200 performing semantic segmentation on a first image 2210, which is a captured image of the target area, is shown on a second image 2220. The second image 2220 is divided into three areas: the ceiling, the wall, and the floor.

In operation 1402, the robot cleaner 200 may check a boundary between the wall and the floor from the captured image. Then, in operation 1403, the robot cleaner 200 may obtain relative depth values corresponding to a plurality of spots located on the boundary.

Referring to FIG. 22, a boundary 2221 between the wall and the floor is displayed on the second image 2220. Because the robot cleaner 200 performs LiDAR scanning at a height close to the floor, a line on which the robot cleaner 200 performs the LiDAR scanning may be close to the boundary 2221 between the wall and the floor. Therefore, according to an embodiment of the disclosure, the robot cleaner 200 may check the boundary 2221 between the wall and the floor on the captured image (second image 2220) on which semantic segmentation has been performed, and may obtain the relative depth values $d'_{11}, d'_{12}, d'_{13}, ..., d'_{1k}$ corresponding to a plurality of spots located on the checked boundary 2221 from a depth image (third image 2230). The robot cleaner 200 may search the third image 2230 for a boundary 2231 corresponding to the boundary 2221 displayed on the second image 2220, and may obtain the relative depth values $d'_{11}, d'_{12}, d'_{13}, ..., d'_{1k}$ corresponding to a plurality of spots located on the boundary 2231 displayed on the third image 2230.

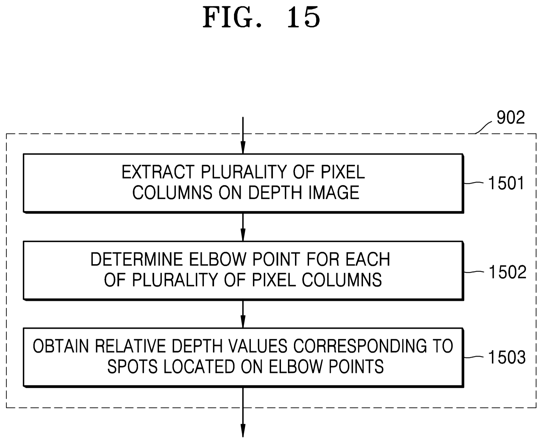

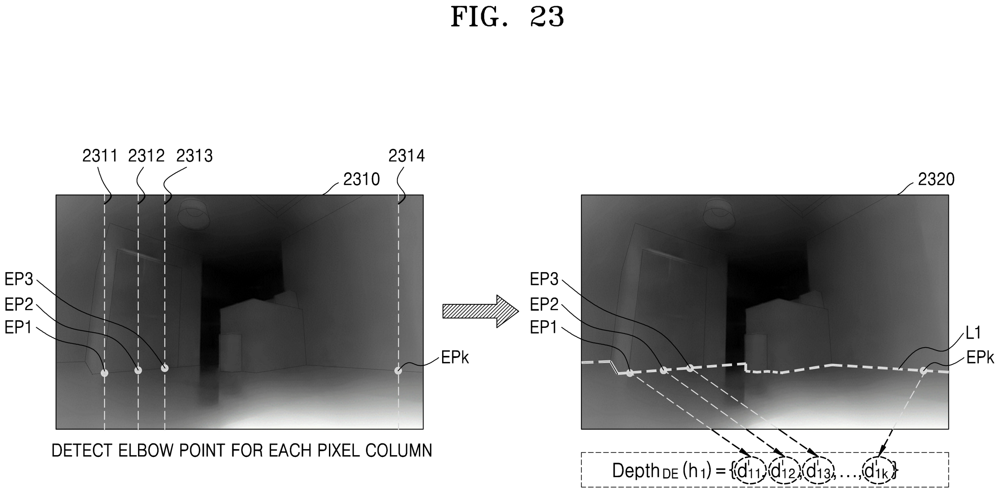

FIG. 15 is a flowchart for explaining sub-operations included in operation 902 of FIG. 9, and FIG. 23 is a view for explaining an operation of obtaining the depth values corresponding to the LiDAR scan data from the depth image through elbow point detection, in a process of generating a spatial map, according to an embodiment of the disclosure.

Referring to FIG. 15, in operation 1501, the robot cleaner 200 may extract a plurality of pixel columns on the depth image. Then, in operation 1502, the robot cleaner 200 may determine (detect) an elbow point for each of the plurality of pixel columns. In this case, the elbow point may refer to a spot where a degree to which a depth value changes in a lengthwise direction of each pixel column is a preset certain reference or less.

Referring to FIG. 23, a plurality of pixel columns, namely, first, second, third, and k-th pixel columns 2311, 2312, 2313, and 2314, are displayed in a first image 2310. According to an embodiment of the disclosure, the robot cleaner 200 may extract the first, second, third, and k-th pixel columns 2311, 2312, 2313, and 2314 from the depth image (first image 2310) at regular intervals. In this case, a distance between the extracted first, second, third, and k-th pixel columns 2311, 2312, 2313, and 2314 may be equal to a distance between spots corresponding to the depth values of the LiDAR scan data.

The robot cleaner 200 may detect an elbow point for each of the first, second, third, and k-th pixel columns 2311, 2312, 2313, and 2314 on the first image 2310. For example, the robot cleaner 200 may ascertain a degree to which a depth value varies, by comparing the depth values of pixels in a lengthwise direction of the first pixel column 2311 with each other, and may determine, as a first elbow point EP1, a spot where the degree to which the depth value varies is changed to the preset certain reference or less. The robot cleaner 200 may detect elbow points EP2 through EPk from the second through k-th pixel columns 2312 through 2314 in the same manner as described above.

The robot cleaner 200 detects an elbow point because the elbow point may be likely to be located at a boundary between the wall and the floor, and, as described above, a line on which the robot cleaner 200 performs LiDAR scanning is highly likely to be close to the boundary between the wall and the floor. Therefore, in one or more embodiments of the disclosure, it may be assumed that the first, second, third, and k-th elbow points EP1, EP2, EP3, and EPk detected from the first, second, third, and k-th pixel columns 2311, 2312, 2313, and 2314 are located on the first line L1 corresponding to the LiDAR scan data.

In operation 1503, the robot cleaner 200 may obtain relative depth values corresponding to spots located on the elbow points. Referring to FIG. 23, the first line L1 corresponding to the LiDAR scan data is displayed on a second image 2320, and the first, second, third, and k-th elbow points EP1, EP2, EP3, and EPk are displayed on the first line L1. The robot cleaner 200 may extract the relative depth values $d'_{11}, d'_{12}, d'_{13}, ...,$ and $d'_{1k}$ corresponding to the first, second, third, and k-th elbow points EP1, EP2, EP3, and EPk from the depth image (second image 2320).

The relative depth information DH1 obtained by the robot cleaner 200 according to the method described above with reference to FIGS. 13 through 15 and FIGS. 21 through 23 corresponds to the relative depth information DH1 described above with reference to FIG. 18. That is, the robot cleaner 200 may obtain depth values (relative depth values) on the depth image for spots corresponding to the LiDAR scan data according to the three methods described above.

4. Method of displaying detected objects at accurate locations on a spatial map

According to an embodiment of the disclosure, the robot cleaner 200 may display an object detected from a captured image on a spatial map. For example, the robot cleaner 200 may perform object recognition on the captured image to estimate the size, shape, type, etc. of the object, and display a result of the estimation on the spatial map.

A specific method, performed by the robot cleaner 200, of determining the location of the object and an area occupied by the object on the spatial map, according to an embodiment of the disclosure, is as follows. The robot cleaner 200 may perform the following operations after operations 605 and 606 of FIG. 6.

The robot cleaner 200 may determine the area where the detected object is located, by comparing the border of the spatial map determined based only on the LiDAR scan data with the border of the spatial map determined based on both the LiDAR scan data and the captured image. Then, the robot cleaner 200 may display the object in the determined area. At this time, the robot cleaner 200 may also display the shape, type, or the like of the object estimated from the captured image.

Referring to FIGS. 2A and 2B, the spatial map 10 on the left corresponds to a spatial map determined based on both the LiDAR scan data and the captured image, and the old spatial map 20 on the right corresponds to a spatial map determined based only on the LiDAR scan data. When the robot cleaner 200 compares the border of the spatial map 10 on the left with the border of the old spatial map 20 on the right, the robot cleaner 200 may determine that an object exists in each of the first through sixth areas 21 through 26. Accordingly, the robot cleaner 200 may display an object in each of the first through sixth areas 21 through 26 on the spatial map 10. At this time, the robot cleaner 200 may also display the shape, type, or the like of the object estimated from the captured image.

By generating a spatial map according to the above-described embodiments, an effect of generating a spatial map that accurately reflects the structure of a space even when objects (e.g., furniture and home appliances) exist in the space may be expected.

A method of generating a spatial map, according to an embodiment of the disclosure, may include obtaining a captured image of a target area in a space, obtaining LiDAR scan data by scanning a depth of the target area with respect to a preset first height, performing object detection on the captured image, and, when an object is not detected from the captured image, generating a spatial map of the target area, based on the LiDAR scan data, and, when an object is detected from the captured image, generating a spatial map of the target area, based on all of the LiDAR scan data and the captured image.

A method of generating a spatial map, according to an embodiment of the disclosure, may include obtaining a captured image of a target area in a space, obtaining LiDAR scan data by scanning a depth of the target area with respect to a first height, performing object detection on the captured image, and, according to the performed object detection, generating a spatial map of the target area, based on the LiDAR scan data and the captured image.

According to an embodiment of the disclosure, when an object is detected from the captured image, the generating of the spatial map may include obtaining depth values for a plurality of spots located at a second height different from the first height in the target area, by using the captured image, and generating the spatial map, based on the obtained depth values.

According to an embodiment of the disclosure, the obtaining of the depth values may include obtaining a depth image from the captured image, performing depth calibration for making a scale of the LIDAR scan data identical to a scale of the depth image, determining, as the second height, a height at which the detected object does not exist in the target area, and obtaining depth values for the plurality of spots located at the second height from the depth image, by reflecting a result of the depth calibration.

According to an embodiment of the disclosure, the performing of the depth calibration may include obtaining absolute depth values for a plurality of spots located at the first height from the LIDAR scan data, obtaining relative depth values for the plurality of spots located at the first height from the depth image, and obtaining a scale factor for transforming a relative depth value included in the depth image into an absolute depth value, based on the obtained absolute depth values and the obtained relative depth values.

According to an embodiment of the disclosure, the obtaining of the scale factor may include determining a value of the scale factor such that a difference between the absolute depth values for the plurality of spots located at the first height and values obtained by multiplying the relative depth values for the plurality of spots located at the first height by the scale factor is minimal, by using a cost function.

According to an embodiment of the disclosure, the determining of, as the second height, the height at which the detected object does not exist may include identifying a range of heights where the object does not exist in the target area, by analyzing the captured image, and determining any one height from the identified range as the second height.

According to an embodiment of the disclosure, the determining of, as the second height, the height at which the detected object does not exist may include determining borders of the spatial map of the target area for a plurality of heights different from the first height, based on the depth image, and determining, as the second height, a height corresponding to a border having a minimum number of junctions from among the determined borders.

According to an embodiment of the disclosure, the determining of, as the second height, the height at which the detected object does not exist may include calculating areas of the spatial map of the target area for the plurality of heights different from the first height, based on the depth image; and determining a height corresponding to a maximum area from among the calculated areas as the second height.

According to an embodiment of the disclosure, the obtaining of the relative depth values for the plurality of spots located at the first height from the depth image may include obtaining a transformation matrix for position matching between the LiDAR scan data and the captured image, transforming locations of spots corresponding to depth values included in the LiDAR scan data into locations on the depth image by using the transformation matrix, and obtaining relative depth values corresponding to spots of the transformed locations from the depth image.

EP 4 741 878 A1

According to an embodiment of the disclosure, the obtaining of the relative depth values for the plurality of spots located at the first height from the depth image may include performing semantic segmentation on the captured image, identifying a boundary between a wall and a floor in the captured image, and obtaining relative depth values corresponding to a plurality of spots located on the boundary.

According to an embodiment of the disclosure, the obtaining of the relative depth values for the plurality of spots located at the first height from the depth image may include extracting a plurality of pixel columns from the depth image, determining an elbow point for each of the plurality of pixel columns, and obtaining relative depth values corresponding to spots located at the determined elbow points, and the elbow point may be a spot where a degree to which a depth value varies in a lengthwise direction of the pixel column is changed to a preset certain reference or less.

According to an embodiment of the disclosure, the method may further include, in the case that an object is detected from the captured image, determining an area where the detected object is located, by comparing a border of the spatial map determined based only on the LiDAR scan data with a border of the spatial map determined based on both the LiDAR scan data and the captured image, and displaying the detected object on the determined area on the spatial map.

An electronic device for generating a spatial map, according to an embodiment of the disclosure, may include a memory storing a program for generating a spatial map, and at least one processor, wherein the at least one processor is configured to execute the program to obtain a captured image of a target area in a space, obtain LiDAR scan data by scanning a depth of the target area with respect to a preset first height, perform object detection on the captured image, and then, when an object is not detected from the captured image, generate a spatial map for the target area, based on the LiDAR scan data, and, when an object is detected from the captured image, generate a spatial map of the target area, based on all of the LiDAR scan data and the captured image.

An electronic device for generating a spatial map, according to an embodiment of the disclosure, may include memory storing a program for generating a spatial map, and at least one processor, wherein, by executing the program stored in the memory, the at least one processor is configured to obtain a captured image of a target area in a space, obtain LiDAR scan data by scanning a depth of the target area with respect to a first height, perform object detection on the captured image, and, according to the performed object detection, generate a spatial map of the target area, based on all of the LiDAR scan data and the captured image.

According to an embodiment of the disclosure, in the case that an object is detected from the captured image, when generating the spatial map, the at least one processor may obtain depth values for a plurality of spots located at a second height different from the first height in the target area, by using the captured image, and then generate the spatial map, based on the obtained depth values.

According to an embodiment of the disclosure, when obtaining the depth values, the at least one processor may obtain a depth image from the captured image, perform depth calibration for making a scale of the LIDAR scan data identical to a scale of the depth image, determine, as the second height, a height at which the detected object does not exist in the target area, and then obtain depth values for the plurality of spots located at the second height from the depth image, by reflecting a result of the depth calibration.

According to an embodiment of the disclosure, when performing the depth calibration, the at least one processor may obtain absolute depth values for a plurality of spots located at the first height from the LIDAR scan data, obtain relative depth values for the plurality of spots located at the first height from the depth image, and then obtain a scale factor for transforming a relative depth value included in the depth image into an absolute depth value, based on the obtained absolute depth values and the obtained relative depth values.

According to an embodiment of the disclosure, when obtaining the scale factor, the at least one processor may determine a value of the scale factor such that a difference between the absolute depth values for the plurality of spots located at the first height and values obtained by multiplying the relative depth values for the plurality of spots located at the first height by the scale factor is minimal, by using a cost function.

According to an embodiment of the disclosure, in determining, as the second height, a height at which the detected object does not exist, the at least one processor may identify a range of heights where the object does not exist in the target area, by analyzing the captured image, and then determine any one height from the identified range as the second height.

According to an embodiment of the disclosure, in determining, as the second height, a height at which the detected object does not exist, the at least one processor may determine borders of the spatial map of the target area for a plurality of heights different from the first height, based on the depth image, and then determine, as the second height, a height corresponding to a border having a minimum number of junctions from among the determined borders.

Various embodiments of the disclosure may be implemented or supported by one or more computer programs, and the one or more computer programs may be formed from computer-readable program code and may be included in computer-readable media. According to the disclosure, an "application" and a "program" may represent one or more computer programs, software components, instruction sets, procedures, functions, objects, classes, instances, related data, or a portion thereof, which are suitable for implementation in computer-readable program code. "Computer-readable program code" may include various types of computer code including source code, objective code, and executable code.

16

"Computer-readable media" may include various types of media that may be accessed by a computer, like read only memory (ROM), random access memory (RAM), a hard disk drive (HDD), a compact disk (CD), a digital video disk (DVD), and various other types of memory.

A machine-readable storage medium may be provided as a non-transitory storage medium. The non-transitory storage media are tangible devices and may exclude wired, wireless, optical, or other communication links that transmit temporary electrical or other signals. The non-transitory storage media do not distinguish between a case in which data is semi-permanently stored in storage media and a case in which data is temporarily stored in storage media. For example, the non-transitory storage media may include a buffer in which data is temporarily stored. Computer readable media can be any available media which can be accessed by computers, and may include all volatile/non-volatile and removable/non-removable media. Computer readable media includes media in which data can be permanently stored and media in which data can be stored and overwritten afterward, such as rewritable optical disks or removable memory devices.

According to an embodiment of the disclosure, a method according to various disclosed embodiments may be provided by being included in a computer program product. The computer program product, which is a commodity, may be traded between sellers and buyers. Computer program products may be distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

While the disclosure has been particularly shown and described with reference to exemplary embodiments thereof, it will be understood that various changes in form and details may be made therein without departing from the spirit and scope of the disclosure. For example, an appropriate result may be attained even when the above-described techniques are performed in a different order from the above-described method, and/or components, such as the above-described system, structure, device, and circuit, are coupled or combined in a different form from the above-described methods or substituted for or replaced by other components or equivalents thereof. Thus, the above-described embodiments should be considered in descriptive sense only and not for purposes of limitation. For example, each component described as a single type may be implemented in a distributed manner, and similarly, components described as being distributed may be implemented in a combined form.

The scope of the disclosure is indicated by the scope of the claims to be described below rather than the above detailed description, and all changes or modified forms derived from the meaning and scope of the claims and the concept of equivalents thereof should be interpreted as being included in the scope of the disclosure.

**Claims**

1. A method comprising:

   obtaining a captured image of a target area in a space;
   obtaining light detection and ranging (LiDAR) scan data by scanning a depth of the target area with respect to a first height;
   performing object detection on the captured image; and
   according to the performed object detection, generating a spatial map of the target area based on the LiDAR scan data and the captured image.

2. The method of claim 1, wherein, based on an object being detected from the captured image, the generating the spatial map comprises:

   obtaining depth values at a plurality of spots along a second height different from the first height in the target area, based on the captured image; and
   generating the spatial map, based on the obtained depth values.

3. The method of any one of claims 1 and 2, wherein the obtaining the depth values comprises:

   obtaining a depth image from the captured image;
   performing depth calibration for making a scale of the LiDAR scan data identical to a scale of the depth image;
   determining, as the second height, a height at which the detected object is not detected in the target area; and
   obtaining depth values at the plurality of spots along the second height from the depth image, based on a result of the depth calibration.

4.  The method of any one of claims 1 to 3, wherein the performing the depth calibration comprises:

    obtaining absolute depth values at a plurality of spots along the first height from the LiDAR scan data;
    obtaining relative depth values at the plurality of spots along the first height from the depth image; and
    obtaining a scale factor for transforming a relative depth value included in the depth image into an absolute depth value, based on the obtained absolute depth values and the obtained relative depth values.

5.  The method of any one of claims 1 to 4, wherein the obtaining the scale factor comprises determining a value of the scale factor such that a difference between the absolute depth values of the plurality of spots along the first height, and a product of the relative depth values of the plurality of spots along the first height and the scale factor is minimal, according to a cost function.

6.  The method of any one of claims 1 to 5, wherein the determining the second height comprises:

    identifying a range of heights at which the detected object is not detected in the target area, based on the captured image; and
    determining a height within the identified range as the second height.

7.  The method of any one of claims 1 to 6, wherein the determining the second height comprises:

    based on the depth image, determining borders of the spatial map of the target area at a plurality of heights different from the first height; and
    determining, as the second height, a height corresponding to a border having a minimum number of junctions among the determined borders.

8.  The method of any one of claims 1 to 7, wherein the determining the second height comprises:

    based on the depth image, calculating areas of the spatial map of the target area at a plurality of heights different from the first height; and
    determining a height corresponding to a maximum area among the calculated areas as the second height.

9.  The method of any one of claims 1 to 8, further comprising:

    based on an object being detected from the captured image,
    determining an area at which the detected object is located, by comparing a border of the spatial map determined based only on the LiDAR scan data with a border of the spatial map determined based on the LiDAR scan data and the captured image; and
    displaying the detected object on the determined area on the spatial map.

10. A non-transitory computer-readable recording medium having recorded thereon a computer program, which, when executed by a computer, performs the method of any one of claims 1 to 9.

11. An electronic device 100 for generating a spatial map, the electronic device comprising:

    memory 130 storing a program for generating a spatial map; and
    at least one processor 120,
    wherein, by executing the program stored in the memory 130, the at least one processor 120 is configured to:

        obtain a captured image of a target area in a space;
        obtain light detection and ranging (LiDAR) scan data by scanning a depth of the target area with respect to a first height;
        perform object detection on the captured image; and
        according to the performed object detection, generate a spatial map of the target area, based on the LiDAR scan data and the captured image.

12. The electronic device of claim 11, wherein, in the generating the spatial map, the at least one processor 120 is configured to:

based on an object being detected from the captured image, obtain depth values at a plurality of spots along a second height different from the first height in the target area, based on the captured image, and

generate the spatial map, based on the obtained depth values.

13. The electronic device of any one of claims 11 and 12, wherein, in the obtaining the depth values, the at least one processor 120 is configured to:

obtain a depth image from the captured image,

perform depth calibration for making a scale of the LIDAR scan data identical to a scale of the depth image,

determine, as the second height, a height at which the detected object is not detected in the target area, and

obtain depth values at the plurality of spots along the second height from the depth image, based on a result of the depth calibration.

14. The electronic device of any one of claims 11 to 13, wherein, in the performing the depth calibration, the at least one processor 120 is configured to:

obtain absolute depth values at a plurality of spots along the first height from the LiDAR scan data,

obtain relative depth values at the plurality of spots along the first height from the depth image, and

obtain a scale factor for transforming a relative depth value included in the depth image into an absolute depth value, based on the obtained absolute depth values and the obtained relative depth values.

15. The electronic device of any one of claims 11 to 14, wherein, in the obtaining the scale factor, the at least one processor 120 is configured to:

determine a value of the scale factor such that a difference between the absolute depth values at the plurality of spots along the first height, and a product of the relative depth values at the plurality of spots along the first height and the scale factor is minimal, according to a cost function.

# FIG. 1

# FIG. 2

EP 4 741 878 A1

# FIG. 3

# FIG. 4

# FIG. 5

# FIG. 6

START

OBTAIN CAPTURED IMAGE OF
TARGET AREA IN SPACE —— 601

OBTAIN LiDAR SCAN DATA BY SCANNING
DEPTH OF TARGET AREA WITH RESPECT —— 602
TO PRESET FIRST HEIGHT

PERFORM OBJECT DETECTION
ON CAPTURED IMAGE —— 603

HAS OBJECT BEEN
NO ← DETECTED FROM CAPTURED —— 604
IMAGE?

YES

606

GENERATE SPATIAL MAP FOR
TARGET AREA, BASED ON
ONLY LiDAR SCAN DATA

GENERATE SPATIAL MAP FOR TARGET
AREA, BASED ON BOTH LiDAR SCAN —— 605
DATA AND CAPTURED IMAGE

END

# FIG. 7

```
                                              605
  ┌ ─ ─ ─ ─ ─ ─ ─ ─ ─ ─ ─ ─ ─ ─ ─ ─ ─ ─ ─ ┐
  │  ┌─────────────────────────────────┐    │
  │  │ OBTAIN DEPTH VALUES FOR PLURALITY│    │
  │  │  OF SPOTS LOCATED AT SECOND HEIGHT│   │  701
  │  │ DIFFERENT FROM FIRST HEIGHT IN TARGET│ │
  │  │   AREA BY USING CAPTURED IMAGE   │    │
  │  └─────────────────────────────────┘    │
  │                                         │
  │  ┌─────────────────────────────────┐    │
  │  │      GENERATE SPATIAL MAP,       │    │  702
  │  │  BASED ON OBTAINED DEPTH VALUES  │    │
  │  └─────────────────────────────────┘    │
  └ ─ ─ ─ ─ ─ ─ ─ ─ ─ ─ ─ ─ ─ ─ ─ ─ ─ ─ ─ ┘
```

# FIG. 8

OBTAIN DEPTH IMAGE FROM CAPTURED IMAGE — 801

PERFORM DEPTH CALIBRATION FOR MAKING SCALE OF LiDAR SCAN DATA IDENTICAL WITH THAT OF DEPTH IMAGE — 802

DETERMINE HEIGHT AT WHICH OBJECT DETECTED FROM TARGET AREA DOES NOT EXIST, AS SECOND HEIGHT — 803

OBTAIN DEPTH VALUES FOR THE PLURALITY OF SPOTS LOCATED AT SECOND HEIGHT FROM DEPTH IMAGE BY REFLECTING RESULT OF DEPTH CALIBRATION — 804

701

# FIG. 9

802

OBTAIN ABSOLUTE DEPTH VALUES FOR PLURALITY OF SPOTS LOCATED AT FIRST HEIGHT FROM LiDAR SCAN DATA — 901

OBTAIN RELATIVE DEPTH VALUES FOR PLURALITY OF SPOTS LOCATED AT FIRST HEIGHT FROM DEPTH IMAGE — 902

OBTAIN SCALE FACTOR FOR TRANSFORMING RELATIVE DEPTH VALUE INCLUDED IN DEPTH IMAGE INTO ABSOLUTE DEPTH VALUE, BASED ON ABSOLUTE DEPTH VALUES AND RELATIVE DEPTH VALUES — 903

# FIG. 10

IDENTIFY RANGE OF HEIGHTS WHERE NO OBJECTS EXIST FROM TARGET AREA BY ANALYZING CAPTURED IMAGE — 1001

DETERMINE ONE HEIGHT FROM IDENTIFIED RANGE AS SECOND HEIGHT — 1002

803

# FIG. 11

803

DETERMINE RESPECTIVE BORDERS OF SPATIAL MAP FOR TARGET AREA FOR PLURALITY OF HEIGHTS DIFFERENT FROM FIRST HEIGHT, BASED ON DEPTH IMAGE

1101

DETERMINE, AS SECOND HEIGHT, HEIGHT CORRESPONDING TO BORDER WITH MINIMUM NUMBER OF JUNCTIONS FROM AMONG DETERMINED BORDERS

1102

# FIG. 12

CALCULATE RESPECTIVE AREAS OF SPATIAL MAP FOR TARGET AREA FOR PLURALITY OF HEIGHTS DIFFERENT FROM FIRST HEIGHT, BASED ON DEPTH IMAGE — 1201

DETERMINE HEIGHT CORRESPONDING TO MAXIMUM AREA FROM AMONG CALCULATED AREAS AS SECOND HEIGHT — 1202

803

# FIG. 13

902

```
┌─────────────────────────────────────────────────────┐
│  ┌───────────────────────────────────────────┐       │
│  │  OBTAIN TRANSFORMATION MATRIX FOR POSITION │       │
│  │      MATCHING BETWEEN LiDAR SCAN           │ ─ 1301│
│  │        DATA AND CAPTURED IMAGE             │       │
│  └───────────────────────────────────────────┘       │
│                                                       │
│  ┌───────────────────────────────────────────┐       │
│  │ TRANSFORM POSITIONS OF SPOTS CORRESPONDING │       │
│  │   TO DEPTH VALUES INCLUDED IN LiDAR SCAN   │       │
│  │       DATA INTO POSITIONS ON DEPTH IMAGE,  │ ─ 1302│
│  │       BY USING TRANSFORMATION MATRIX       │       │
│  └───────────────────────────────────────────┘       │
│                                                       │
│  ┌───────────────────────────────────────────┐       │
│  │ OBTAIN RELATIVE DEPTH VALUES CORRESPONDING │       │
│  │  TO SPOTS AT TRANSFORMED POSITIONS FROM    │ ─ 1303│
│  │           DEPTH IMAGE                      │       │
│  └───────────────────────────────────────────┘       │
└─────────────────────────────────────────────────────┘
```

# FIG. 14

902

| PERFORM SEMANTIC SEGMENTATION ON CAPTURED IMAGE | 1401 |

| CHECK BOUNDARY BETWEEN WALL AND FLOOR FROM CAPTURED IMAGE | 1402 |

| OBTAIN RELATIVE DEPTH VALUES CORRESPONDING TO PLURALITY OF SPOTS LOCATED ON BOUNDARY | 1403 |

# FIG. 15

EXTRACT PLURALITY OF PIXEL
COLUMNS ON DEPTH IMAGE — 1501

DETERMINE ELBOW POINT FOR EACH
OF PLURALITY OF PIXEL COLUMNS — 1502

OBTAIN RELATIVE DEPTH VALUES CORRESPONDING TO
SPOTS LOCATED ON ELBOW POINTS — 1503

902

# FIG. 16

$$Depth_L(h_1) = \{d_{11}, d_{12}, d_{13}, \ldots, d_{1k}\} \quad LH1$$

# FIG. 17

1700

1701

# FIG. 18

1810

CAPTURED IMAGE OF TARGET AREA

TRANSFORMATION
depth
estimation

1820

CHECK SPOTS CORRESPONDING TO
LiDAR SCAN DATA

1830

DH1

$$Depth_{DE}(h_1) = \{d^i_{11}, d^i_{12}, d^i_{13}, \ldots, d^i_{1k}\}$$

EXTRACTION OF
DEPTH VALUE

L1

# FIG. 19

$$\text{Depth}_L(h_1) = \{d_{11}, d_{12}, d_{13}, \ldots, d_{1k}\}$$ (LH1)

$$\text{Depth}_{DE}(h_1) = \{d'_{11}, d'_{12}, d'_{13}, \ldots, d'_{1k}\}$$ (DH1)

CF:
$$\text{Cost function: } J(\theta) = \sum_{h=1}^{n}(\text{Depth}_L(h) - \theta * \text{Depth}_{DE}(h))^2$$
$$\text{Goal: } \min_{\theta} J(\theta)$$

Depth calibration → Scale factor: $\theta$ (SF)

EP 4 741 878 A1

## FIG. 20

$$Depth_{DE}(h_2) = \{d^!_{21}, d^!_{22}, d^!_{23}, \ldots, d^!_{2k}\}$$

DH2

$\times \theta$

APPLY SCALE FACTOR

$$Depth_{L}(h_2) = \{d_{21}, d_{22}, d_{23}, \ldots, d_{2k}\}$$

LH2

EP 4 741 878 A1

# FIG. 21

LH1 — $\text{Depth}_L(h_1) = \{d_{11}, d_{12}, d_{13}, \ldots, d_{1k}\}$

— 2110

L1

TM — $\text{Depth}_{DE} = \text{Transform}_{lidar\_to\_depth}(\text{Depth}_L)$

APPLY TRANSFORMATION MATRIX

— 2120

L1

DH1 — $\text{Depth}_{DE}(h_1) = \{d'_{11}, d'_{12}, d'_{13}, \ldots, d'_{1k}\}$

# FIG. 22

SEMANTIC SEGMENTATION

ceiling

wall

floor

$$\text{Depth}_{DE}(h_1) = \{d'_{11}, d'_{12}, d'_{13}, \ldots, d'_{1k}\}$$

DH1

EP 4 741 878 A1

# FIG. 23

DETECT ELBOW POINT FOR EACH PIXEL COLUMN

$$\text{Depth}_{DE}(h_1) = \{d'_{11}, d'_{12}, d'_{13}, \ldots, d'_{1k}\}$$

FIG. 24

EP 4 741 878 A1

# FIG. 25

# EP 4 741 878 A1

## INTERNATIONAL SEARCH REPORT

| International application No. |
|---|
| **PCT/KR2024/016329** |

| A. | CLASSIFICATION OF SUBJECT MATTER |
|---|---|

**G01S 17/89**(2006.01)i; **G01S 7/497**(2006.01)i; **G06T 7/593**(2017.01)i; **G06T 7/62**(2017.01)i; **G06T 7/13**(2017.01)i; **G06T 7/11**(2017.01)i

According to International Patent Classification (IPC) or to both national classification and IPC

| B. | FIELDS SEARCHED |
|---|---|

Minimum documentation searched (classification system followed by classification symbols)

G01S 17/89(2006.01); G01C 21/20(2006.01); G01C 21/30(2006.01); G01S 13/93(2006.01); G01S 17/894(2020.01); G05D 1/02(2006.01); G06K 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(lidar), 이미지(image), 맵(map), 높이(height), 깊이(depth)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2018-0136833 A (LG ELECTRONICS INC.) 26 December 2018 (2018-12-26)<br>See paragraphs [0031]-[0038] and [0085]-[0125]; claims 8-14; and figures 1-13. | 1-3,11-13 |
| Y | KR 10-2023-0112296 A (KUMOH NATIONAL INSTITUTE OF TECHNOLOGY INDUSTRY-ACADEMIC COOPERATION FOUNDATION et al.) 27 July 2023 (2023-07-27)<br>See paragraphs [0025]-[0027]; and figures 1-2. | 1-3,11-13 |
| A | US 2019-0120633 A1 (AI INCORPORATED) 25 April 2019 (2019-04-25)<br>See paragraphs [0069]-[0113]; claims 1-22; and figures 1-14. | 1-3,11-13 |
| A | US 2020-0341149 A1 (INDOOR ROBOTICS LTD.) 29 October 2020 (2020-10-29)<br>See paragraphs [0032]-[0071]; claims 1-13; and figures 1-7. | 1-3,11-13 |
| A | US 11087494 B1 (ZOOX, INC.) 10 August 2021 (2021-08-10)<br>See column 8, line 64 - column 27, line 10; claims 1-19; and figures 1-13B. | 1-3,11-13 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 February 2025** | **03 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/016329** |

**Box No. II     Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☑  Claims Nos.: **4-10, 14-15**
   because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

| International application No. |
|---|
| **PCT/KR2024/016329** |

| Patent document cited in search report | | | Publication date (day/month/year) | Patent family member(s) | | | Publication date (day/month/year) |
|---|---|---|---|---|---|---|---|
| KR | 10-2018-0136833 | A | 26 December 2018 | KR | 10-2326077 | B1 | 12 November 2021 |
| | | | | US | 11602850 | B2 | 14 March 2023 |
| | | | | US | 2020-0114509 | A1 | 16 April 2020 |
| | | | | WO | 2018-230852 | A1 | 20 December 2018 |
| KR | 10-2023-0112296 | A | 27 July 2023 | None | | | |
| US | 2019-0120633 | A1 | 25 April 2019 | AR | 115152 | A1 | 02 December 2020 |
| | | | | BR | 112020023800 | A2 | 23 February 2021 |
| | | | | CA | 3096516 | A1 | 28 November 2019 |
| | | | | CA | 3117899 | A1 | 30 January 2020 |
| | | | | CA | 3120728 | A1 | 28 May 2020 |
| | | | | CN | 112868225 | A | 28 May 2021 |
| | | | | CN | 112868225 | B | 15 March 2024 |
| | | | | US | 10311590 | B1 | 04 June 2019 |
| | | | | US | 10343280 | B1 | 09 July 2019 |
| | | | | US | 10346995 | B1 | 09 July 2019 |
| | | | | US | 10368711 | B1 | 06 August 2019 |
| | | | | US | 10386847 | B1 | 20 August 2019 |
| | | | | US | 10413145 | B1 | 17 September 2019 |
| | | | | US | 10422648 | B2 | 24 September 2019 |
| | | | | US | 10436810 | B1 | 08 October 2019 |
| | | | | US | 10442082 | B1 | 15 October 2019 |
| | | | | US | 10452071 | B1 | 22 October 2019 |
| | | | | US | 10482619 | B2 | 19 November 2019 |
| | | | | US | 10488865 | B2 | 26 November 2019 |
| | | | | US | 10496262 | B1 | 03 December 2019 |
| | | | | US | 10518576 | B1 | 31 December 2019 |
| | | | | US | 10612929 | B2 | 07 April 2020 |
| | | | | US | 10690457 | B2 | 23 June 2020 |
| | | | | US | 10740920 | B1 | 11 August 2020 |
| | | | | US | 10755430 | B1 | 25 August 2020 |
| | | | | US | 10765984 | B1 | 08 September 2020 |
| | | | | US | 10788836 | B2 | 29 September 2020 |
| | | | | US | 10795377 | B2 | 06 October 2020 |
| | | | | US | 10809071 | B2 | 20 October 2020 |
| | | | | US | 10901431 | B1 | 26 January 2021 |
| | | | | US | 10915114 | B2 | 09 February 2021 |
| | | | | US | 10935383 | B1 | 02 March 2021 |
| | | | | US | 10969791 | B1 | 06 April 2021 |
| | | | | US | 11013655 | B1 | 25 May 2021 |
| | | | | US | 11036230 | B1 | 15 June 2021 |
| | | | | US | 11037320 | B1 | 15 June 2021 |
| | | | | US | 11069082 | B1 | 20 July 2021 |
| | | | | US | 11091211 | B1 | 17 August 2021 |
| | | | | US | 11119496 | B1 | 14 September 2021 |
| | | | | US | 11144057 | B1 | 12 October 2021 |
| | | | | US | 11153503 | B1 | 19 October 2021 |
| | | | | US | 11188095 | B1 | 30 November 2021 |
| | | | | US | 11199853 | B1 | 14 December 2021 |
| | | | | US | 11215461 | B1 | 04 January 2022 |
| | | | | US | 11240854 | B2 | 01 February 2022 |

Form PCT/ISA/210 (patent family annex) (July 2022)

EP 4 741 878 A1

**INTERNATIONAL SEARCH REPORT**
Information on patent family members

International application No.

**PCT/KR2024/016329**

| Patent document cited in search report | Publication date (day/month/year) | Patent family member(s) | | | Publication date (day/month/year) |
|---|---|---|---|---|---|
| | | US | 11241791 | B1 | 08 February 2022 |
| | | US | 11274929 | B1 | 15 March 2022 |
| | | US | 11320828 | B1 | 03 May 2022 |
| | | US | 11340079 | B1 | 24 May 2022 |
| | | US | 11348269 | B1 | 31 May 2022 |
| | | US | 11352071 | B1 | 07 June 2022 |
| | | US | 11393114 | B1 | 19 July 2022 |
| | | US | 11427266 | B1 | 30 August 2022 |
| | | US | 11435192 | B1 | 06 September 2022 |
| | | US | 11435746 | B1 | 06 September 2022 |
| | | US | 11449061 | B2 | 20 September 2022 |
| | | US | 11449063 | B1 | 20 September 2022 |
| | | US | 11449064 | B1 | 20 September 2022 |
| | | US | 11454981 | B1 | 27 September 2022 |
| | | US | 11467587 | B2 | 11 October 2022 |
| | | US | 11468588 | B1 | 11 October 2022 |
| | | US | 11481918 | B1 | 25 October 2022 |
| | | US | 11499832 | B1 | 15 November 2022 |
| | | US | 11507108 | B1 | 22 November 2022 |
| | | US | 11548159 | B1 | 10 January 2023 |
| | | US | 11576543 | B2 | 14 February 2023 |
| | | US | 11589402 | B1 | 21 February 2023 |
| | | US | 11628112 | B1 | 18 April 2023 |
| | | US | 11656082 | B1 | 23 May 2023 |
| | | US | 11657531 | B1 | 23 May 2023 |
| | | US | 11669994 | B1 | 06 June 2023 |
| | | US | 11684886 | B1 | 27 June 2023 |
| | | US | 11685449 | B1 | 27 June 2023 |
| | | US | 11693413 | B1 | 04 July 2023 |
| | | US | 11702668 | B2 | 18 July 2023 |
| | | US | 11726489 | B1 | 15 August 2023 |
| | | US | 11726490 | B1 | 15 August 2023 |
| | | US | 11747813 | B1 | 05 September 2023 |
| | | US | 11747819 | B1 | 05 September 2023 |
| | | US | 11768504 | B2 | 26 September 2023 |
| | | US | 11772717 | B1 | 03 October 2023 |
| | | US | 11808580 | B1 | 07 November 2023 |
| | | US | 11815894 | B1 | 14 November 2023 |
| | | US | 11829148 | B1 | 28 November 2023 |
| | | US | 11835343 | B1 | 05 December 2023 |
| | | US | 11835961 | B1 | 05 December 2023 |
| | | US | 11899463 | B1 | 13 February 2024 |
| | | US | 11911328 | B1 | 27 February 2024 |
| | | US | 11917700 | B1 | 27 February 2024 |
| | | US | 11927450 | B2 | 12 March 2024 |
| | | US | 11927965 | B2 | 12 March 2024 |
| | | US | 11961252 | B1 | 16 April 2024 |
| | | US | 11966229 | B1 | 23 April 2024 |
| | | US | 11975455 | B1 | 07 May 2024 |
| | | US | 12025988 | B1 | 02 July 2024 |

Form PCT/ISA/210 (patent family annex) (July 2022)

48

## INTERNATIONAL SEARCH REPORT
### Information on patent family members

| International application No. |
| --- |
| **PCT/KR2024/016329** |

| Patent document cited in search report | | | Publication date (day/month/year) | Patent family member(s) | | | Publication date (day/month/year) |
| --- | --- | --- | --- | --- | --- | --- | --- |
| | | | | US | 12083684 | B1 | 10 September 2024 |
| | | | | US | 12098926 | B2 | 24 September 2024 |
| | | | | US | 2006-0028450 | A1 | 09 February 2006 |
| | | | | US | 2006-0176283 | A1 | 10 August 2006 |
| | | | | US | 2018-0232134 | A1 | 16 August 2018 |
| | | | | US | 2019-0035099 | A1 | 31 January 2019 |
| | | | | US | 2019-0035100 | A1 | 31 January 2019 |
| | | | | US | 2019-0069330 | A1 | 28 February 2019 |
| | | | | US | 2019-0094870 | A1 | 28 March 2019 |
| | | | | US | 2019-0114798 | A1 | 18 April 2019 |
| | | | | US | 2019-0121361 | A1 | 25 April 2019 |
| | | | | US | 2019-0176321 | A1 | 13 June 2019 |
| | | | | US | 2019-0204851 | A1 | 04 July 2019 |
| | | | | US | 2019-0317121 | A1 | 17 October 2019 |
| | | | | US | 2019-0318493 | A1 | 17 October 2019 |
| | | | | US | 2019-0331465 | A1 | 31 October 2019 |
| | | | | US | 2020-0069134 | A1 | 05 March 2020 |
| | | | | US | 2020-0225673 | A1 | 16 July 2020 |
| | | | | US | 2020-0409376 | A1 | 31 December 2020 |
| | | | | US | 2021-0089040 | A1 | 25 March 2021 |
| | | | | US | 2021-0230622 | A1 | 29 July 2021 |
| | | | | US | 2022-0026920 | A1 | 27 January 2022 |
| | | | | US | 2022-0066456 | A1 | 03 March 2022 |
| | | | | US | 2022-0187841 | A1 | 16 June 2022 |
| | | | | US | 2023-0085608 | A1 | 16 March 2023 |
| | | | | US | 2023-0367324 | A1 | 16 November 2023 |
| | | | | US | 2023-0409181 | A1 | 21 December 2023 |
| | | | | US | 2024-0035827 | A1 | 01 February 2024 |
| | | | | US | 2024-0085923 | A1 | 14 March 2024 |
| | | | | US | 2024-0118091 | A1 | 11 April 2024 |
| | | | | US | 2024-0119614 | A1 | 11 April 2024 |
| | | | | US | 2024-0126265 | A1 | 18 April 2024 |
| | | | | US | 2024-0142240 | A1 | 02 May 2024 |
| | | | | US | 2024-0173184 | A1 | 30 May 2024 |
| | | | | US | 2024-0192690 | A1 | 13 June 2024 |
| | | | | US | 2024-0284053 | A1 | 22 August 2024 |
| | | | | US | 7508324 | B2 | 24 March 2009 |
| | | | | US | 9701020 | B1 | 11 July 2017 |
| | | | | US | 9764472 | B1 | 19 September 2017 |
| | | | | US | 9901234 | B1 | 27 February 2018 |
| | | | | US | 9972098 | B1 | 15 May 2018 |
| | | | | WO | 2019-226508 | A1 | 28 November 2019 |
| | | | | WO | 2020-023982 | A2 | 30 January 2020 |
| | | | | WO | 2020-023982 | A3 | 23 April 2020 |
| | | | | WO | 2020-023982 | A9 | 19 March 2020 |
| | | | | WO | 2020-107007 | A1 | 28 May 2020 |
| US | 2020-0341149 | A1 | 29 October 2020 | CN | 112219088 | A | 12 January 2021 |
| | | | | CN | 112219088 | B | 21 June 2024 |
| | | | | EP | 3775776 | A1 | 17 February 2021 |
| | | | | EP | 3775776 | A4 | 28 April 2021 |

Form PCT/ISA/210 (patent family annex) (July 2022)

**INTERNATIONAL SEARCH REPORT**
Information on patent family members

International application No.

**PCT/KR2024/016329**

| Patent document cited in search report | | | Publication date (day/month/year) | Patent family member(s) | | | Publication date (day/month/year) |
|---|---|---|---|---|---|---|---|
| | | | | EP | 3775776 | B1 | 12 October 2022 |
| | | | | US | 10751875 | B2 | 25 August 2020 |
| | | | | US | 2019-0366542 | A1 | 05 December 2019 |
| | | | | WO | 2019-229737 | A1 | 05 December 2019 |
| US | 11087494 | B1 | 10 August 2021 | US | 11748909 | B2 | 05 September 2023 |
| | | | | US | 2022-0012916 | A1 | 13 January 2022 |

Form PCT/ISA/210 (patent family annex) (July 2022)